# EUROPEAN PATENT APPLICATION

(11) **EP 4 406 959 A1**
(43) Date of publication of application: **31.07.2024**
(21) Application number: 22872037.1
(22) Date of filing: 22.09.2022
(51) Int. Cl.: C07F 5/04, C10M 139/00, C10N 30/06, C10N 30/10

(54) **ORGANOBORON COMPOUND, PREPARATION METHOD THEREFOR AND USE THEREOF**

(30) Priority: 22.09.2021 CN 202111105005
(71) Applicant: China Petroleum & Chemical Corporation, Beijing 100728 (CN); Sinopec Research Institute of Petroleum Processing Co., Ltd., Beijing 100083 (CN)
(72) Inventor: CHEN, Xiaowei, Beijing 100083 (CN); TANG, Hongjin, Beijing 100083 (CN); HE, Jingjian, Beijing 100083 (CN)
(74) Representative: Hoffmann Eitle
(86) International application number: PCT/CN2022/120414
(87) International publication number: WO 2023/045992

(57) **Abstract**

The present invention provides a sulfur-free and phosphorus-free organoboron compound, and preparation method thereof and use thereof. The organoboron compound of the present invention has a structure as shown in formula (I):

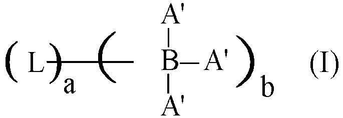

The definition of each group can be found in the specification. The organoboron compound of the present invention has excellent antioxidant properties and anti-wear and friction-reducing properties.

## Description

### Technical Field

The present invention relates to an organoboron compound, in particular to a sulfur-free and phosphorus-free organoboron compound, and preparation method thereof and use thereof, a mixed composition containing the organoboron compound, and a lubricating oil composition containing the organoboron compound.

### Background of Art

With the rapid development of industrial technology, the research and development of lubricating oils and additives thereof have also developed rapidly. For lubricating oil additives, development in the direction of high-temperature resistance, satisfying environmental protection requirements, high efficiency and multi-effects can meet the requirements of higher-grade lubricating oils. Among others, boron-containing lubricating materials have the characteristics of extreme pressure anti-wear, anti-corrosion and anti-rust, sealing and environmental adaptability, non-toxic and odorless; while nitrogen-containing lubricating materials have the characteristics of ashless, high electronegativity, small atomic radius, molecules adsorbed on the metal surface being prone to form hydrogen bonds to enhance the strength of the oil film; and both types of lubricating materials have the advantages of multi-functionality, designable molecular structures, and combinable active elements. Therefore, research on nitrogen-containing organoboron lubricating materials has attracted comprehensive attention in the field of modern friction and lubrication.

CN106366106A discloses a nitrogen-containing borate ester lubricating oil additive prepared by the reaction of boric acid, fatty alcohol, and ethanolamine. The additive has strong hydrolysis resistance and good anti-wear and friction-reducing properties. CN102936527A discloses an organoboron friction reducing agent prepared by reacting boric acid, natural oils, and organic alcohol amines, and the agent has good thermal stability, good oil solubility, and good anti-wear and friction reducing properties. CN1 12410096A discloses a nitrogen-containing borate ester lubricating oil additive prepared by the reaction of boric acid, a sulfur and nitrogen-containing alcohol, and an aromatic diethanolamide. This agent can protect equipment machinery, increase the anti-friction performance of lubricating oil, and reduce energy consumption. CN101735255A discloses a boron-containing nitride prepared by the reaction of oleic acid, triethanolamine, tributyl borate, butanol, or ethanolamine. The boron-containing nitride is added to base oils such as liquid paraffin, exhibiting good effects of anti-wear and friction reduction.

The existing sulfur-free and phosphorus-free organoborons have better anti-wear and friction-reducing properties, but there is still room for improvement in their antioxidant properties. In addition, the development trend of science and technology in additives is in the direction of multi-functionality. The development of multi-functional additives can improve the performance of additives, reduce the variety and dosage of additives in the formula system, improve the applicability of the formula, and help meet the requirements of energy conservation and environmental protection.

### Summary of the Invention

The present invention proposes a sulfur-free and phosphorus-free organoboron compound, preparation method and use thereof, a mixed composition containing the organoboron compound, and a lubricating oil composition containing the organoboron compound. The organoboron compound exhibits excellent antioxidant properties and anti-wear and friction-reducing properties. Specifically, the present invention provides the following technical solutions. An organoboron compound, which has a structure as shown in formula (I): 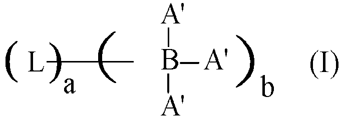 in formula (I), there are a L group(s) and b boron-containing group(s), a is an integer of 1-10 (preferably an integer of 1-5, more preferably 1, 2 or 3), b is an integer of 1-10 (preferably an integer of 1-7, more preferably 1, 2, 3, 4 or 5), each of said a L groups is identical or different from each other and each L group is independently selected from a group represented by formula (II); 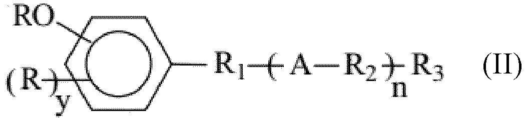 in formula (II), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from Hand C₁₋₂₀ linear or branched alkyl, preferably Hand C₁₋₁₀ linear or branched alkyl, further preferably H and C₁₋₆ linear or branched alkyl); each of A groups in n structure units is identical or different from each other and each A group is independently selected from 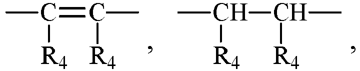 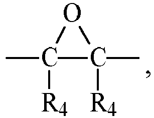 a group represented by formula (III) and a group represented by formula (IV), 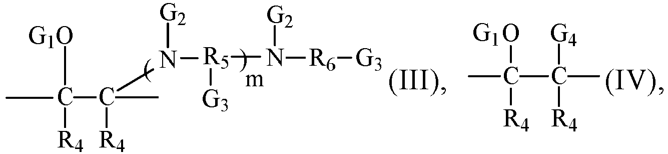
the R₄ group is each independently selected from Hand C₁₋₂₀ linear or branched alkyl (preferably each independently selected from H and C₁₋₆ linear or branched alkyl, preferably selected from H and C₁₋₄ linear or branched alkyl); m is independently an integer of 0-10 (preferably an integer of 0-5, more preferably 0, 1 or 2);
the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
each G₂ group is independently selected from a bonding end bonded to G₄ groups present in other L group(s) than the L group in which it is located, C₁₋₁₀ linear or branched alkyl, -R₆G₃, H (preferably each independently selected from a bonding end bonded to G₄ groups present in other L group(s) than the L group in which it is located, C₁₋₆ linear or branched alkyl, -R₆G₃, H, more preferably each independently selected from a bonding end bonded to G₄ groups present in other L group(s) than the L group in which it is located, C₁₋₄ linear or branched alkyl, -ReGs, H);
each G₃ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H);
the R₆ group is selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
G₄ group is selected from a bonding end bonded to G₂ groups present in other L group(s) than the L group in which it is located, H;
in a L group(s), there is at least one A group that is a group represented by formula (III), there is at least one G₁ group that is a bonding end bonded to the boron atom in the boron-containing group;
each A' group in the b boron-containing group(s) is independently selected from a bonding end bonded to the G₁ group present in the L group, a group represented by formula (V), -OR', the R' group is H or C₁₋₂₀ linear or branched alkyl (preferably H or C₁₋₆ linear or branched alkyl, preferably H or C₁₋₄ linear or branched alkyl); 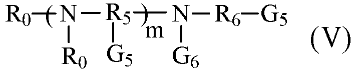 in formula (V), m is independently an integer of 0-10 (preferably an integer of 0-5, more preferably 0, 1 or 2);
the R₀ group is each independently selected from C₁₋₁₀ linear or branched alkyl, -R₆G₅, H (preferably each independently selected from C₁₋₆ linear or branched alkyl, -R₆G₅, H, preferably each independently selected from C₁₋₄ linear or branched alkyl, -R₆G₅, H);
in formula (V), the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
in formula (V), the G₆ group is selected from -R₆G₅, C₁₋₁₀ linear or branched alkyl, H (preferably selected from -R₆G₅, C₁₋₆ linear or branched alkyl, H, preferably selected from -R₆G₅, C₁₋₄ linear or branched alkyl, H);
the G₆ group is independently selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
each G₅ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H), wherein the G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
in the case that the group represented by formula (V) is present, in the group represented by formula (V), there is at least one G₁ group that is a bonding end bonded to the boron atom in the boron-containing group;
in the b boron-containing group(s), there is at least one A' group that is a bonding end bonded to the G₁ group present in the L group;
each group in the organoboron compound complies with the bonding rules.

According to the present invention, when there are two or more structures represented by formula (III) or two or more structures represented by formula (IV) in formula (II), they can be bonded to the group(s) in formula (II) in any way, for example, formula (III) or formula (IV) can be bonded to the R₂ group in formula (II) at its one end, or can be bonded to the R₂ group in formula (II) at its another end.

The present invention provides a process for preparing an organoboron compound, which comprises the following steps:
(1) reacting a compound represented by formula (X) with a peroxide; 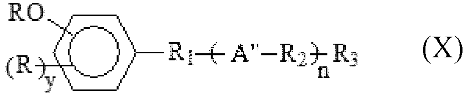 in formula (X), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from Hand C₁₋₂₀ linear or branched alkyl, preferably Hand C₁₋₁₀ linear or branched alkyl, further preferably H and C₁₋₆ linear or branched alkyl); A"s in n structural units are identical or different from each other and each independently selected from 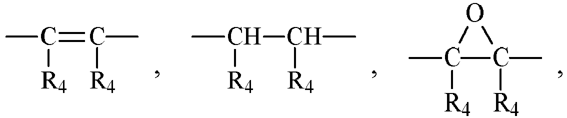 wherein the R₄ group is each independently selected from H and C₁₋₂₀ linear or branched alkyl (preferably each independently selected from H and C₁₋₆ linear or branched alkyl, preferably selected from Hand C₁₋₄ linear or branched alkyl); in formula (X) there is at least one A" that is 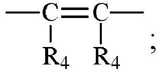
(2) reacting the reaction product of step (1) with a compound represented by formula (Y); 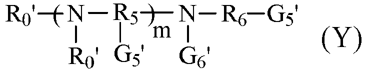
   in formula (Y), m is an integer of 0-10 (preferably an integer of 0-5, more preferably 0, 1 or 2);
   the R₀' group is each independently selected from C₁₋₁₀ linear or branched alkyl, -R₆OH, H (preferably each independently selected from C₁₋₆ linear or branched alkyl, -R₆OH, H, preferably each independently selected from C₁₋₄ linear or branched alkyl, -R₆OH, H);
   the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
   each G₅' group is independently selected from C₁₋₁₀ linear or branched alkyl, OH, H (preferably each independently selected from C₁₋₆ linear or branched alkyl, OH, H, more preferably independently selected from C₁₋₄ linear or branched alkyl, OH, H);
   G₆' group is selected from C₁₋₁₀ linear or branched alkyl, -R₆OH, H (preferably selected from -R₆OH, C₁₋₆ linear or branched alkyl, H, preferably selected from -R₆OH, C₁₋₄ linear or branched alkyl, H); the R₆ group is each independently selected from a single bond, C₁₋₂₀ linear or branched alkylene (preferably each independently selected from a single bond, C₁₋₆ linear or branched alkylene, preferably each independently selected from a single bond, C₁₋₄ linear or branched alkylene);
   in formula (Y), at least one of R₀' group and G₆' group is H, and optionally at least one G₅' group is OH and/or at least one G₆' group and/or at least one R₀' group is -R₆OH;
(3) reacting the reaction product of step (2) with an inorganic boron compound to obtain an organoboron compound.
   The preparation method of the organoboron compound of the present invention may further comprise step (4), wherein the reaction product of step (3) and a compound represented by formula (Y') are reacted to produce an organoboron compound, 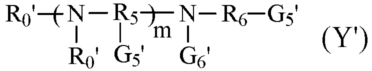
   in formula (Y'), m is an integer of 0-10 (preferably an integer of 0-5, more preferably 0, 1 or 2);
   in formula (Y'), the R₀' group is each independently selected from C₁₋₁₀ linear or branched alkyl, -R₆OH, H (preferably each independently selected from C₁₋₆ linear or branched alkyl, -R₆OH, H, preferably each independently selected from C₁₋₄ linear or branched alkyl, -R₆OH, H);
   in formula (Y'), the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
   in formula (Y'), each G₅' group is independently selected from C₁₋₁₀ linear or branched alkyl, OH, H (preferably each independently selected from C₁₋₆ linear or branched alkyl, OH, H, more preferably independently selected from C₁₋₄ linear or branched alkyl, OH, H);
   in formula (Y'), G₆' group is selected from C₁₋₁₀ linear or branched alkyl, - R₆OH, H (preferably selected from -R₆OH, C₁₋₆ linear or branched alkyl, H, preferably selected from -R₆OH, C₁₋₄ linear or branched alkyl, H); the R₆ group is each independently selected from a single bond, C₁₋₂₀ linear or branched alkylene (preferably each independently selected from a single bond, C₁₋₆ linear or branched alkylene, preferably each independently selected from a single bond, C₁₋₄ linear or branched alkylene);
   in formula (Y'), at least one G₅' group is OH and/or at least one G₆' group and/or at least one R₀' group is -R₆OH.

### Technical effect

The organoboron compound of the present invention does not contain sulfur and phosphorus elements, and while showing excellent anti-wear and friction-reducing properties, it also has extremely excellent antioxidant properties.

In the mixed composition of the organoboron compound of the present invention, the compound of the present invention is combined with other lubricating oil additives to exhibit excellent synergistic effects.

The preparation method of the organoboron compound of the present invention is simple and has high production efficiency.

In addition, the organoboron compound of the present invention can be prepared using cardanol as a raw material. Cardanol has wide sources and huge reserves, which meets the requirements of green chemistry and the strategic requirements of sustainable development.

### Description of the drawings

Figure 1 is the infrared spectrum of organoboron compound W-01, the product of Example 2.
Figure 2 is the ¹H-NMR spectrum of organoboron compound W-01, the product of Example 2.
Figure 3 is the ¹H-NMR spectrum of organoboron compound W-02, the product of Example 3.
Figure 4 is the ¹H-NMR spectrum of organoboron compound V-01, the product of Comparative Example 1.

### Detailed Description of the Invention

In this specification, the term "single bond" is sometimes used in the definition of groups. The so-called "single bond" means that the group does not exist. For example, assuming the structural formula -CH₂-A-CH₃, where group A is defined as being selected from a single bond and methyl, based on this, if A is a single bond, it means that the group A does not exist, and the structural formula is correspondingly simplified to -CH₂-CH₃.

In this specification, when a spacer group optionally exists between two groups, when the spacer group is absent, it means that the two groups are directly attached. For example, assuming the structural formula -CH₂-(A)ₚ-CH₃, where A is a spacer group, if p is 0, it means that the group A does not exist. At this time, -CH₂- and -CH₃ are directly bonded to form a structure of -CH₂-CH₃.

In the context of this specification, the expression "number + valent + group" or similar expressions refers to a group obtained by removing the number of hydrogen atoms represented by the number from the basic structure corresponding to the group (such as chain, ring or combination thereof, etc.), preferably a group obtained by removing the number of hydrogen atoms represented by the number from the carbon atoms (preferably saturated carbon atoms and/or non-identical carbon atoms) contained in the structure. For example, "3-valent linear or branched alkyl" refers to a group obtained by removing 3 hydrogen atoms from a linear or branched alkane (i.e., the basic chain corresponding to the linear or branched alkyl).

In the context of the present invention, the linear or branched hydrocarbyl can be a linear or branched alkyl, or can be a linear or branched alkenyl containing one or more (e.g., 1-5, 1-4, 1-3, 1-2) carbon-carbon double bonds, or can be a linear or branched alkynyl containing one or more (e.g., 1-5, 1-4, 1-3, 1-2) carbon-carbon triple bonds, or can be a linear or branched hydrocarbyl containing one or more (e.g., 1-5, 1-4, 1-3, 1-2) carbon-carbon double bonds and carbon-carbon triple bonds.

In the context of this specification, alkyl means a group obtained by removing a hydrogen atom from an alkane without violating the valence, preferably a group obtained by removing a hydrogen atom from a terminal carbon atom of an alkane. In the present invention, alkyl can be C₁₋₁₀₀ linear or branched alkyl, C₁₋₃₀ linear or branched alkyl, C₁₋₂₀ linear or branched alkyl, C₁₋₁₀ linear or branched alkyl, C₁₋₆ linear or branched alkyl, C₁₋₄ linear or branched alkyl. Specific examples of these alkyl groups can include methyl, ethyl, propyl, isopropyl, butyl, sec-butyl, isobutyl, tert-butyl, pentyl, isopentyl, hexyl, heptyl, octyl, nonyl, decyl, undecyl, dodecyl, tridecyl, tetradecyl, pentadecyl, hexadecyl and their isomers, etc., but not limited to these.

In the context of this specification, alkylene means a group obtained by removing two hydrogen atoms from an alkane without violating the valence, preferably a group obtained by removing one hydrogen atom respectively from two different carbon atoms, more preferably a group obtained by removing one hydrogen atom respectively from two terminal carbon atoms. In the present invention, alkylene can be C₁₋₃₀ linear or branched alkylene, C₁₋₂₀ linear or branched alkylene, C₁₋₁₀ linear or branched alkylene, C₁₋₆ linear or branched alkylene, C₁₋₄ linear or branched alkylene, C₁₋₃ linear or branched alkylene. Specific examples of these alkylene groups include, but are not limited to, groups obtained by removing one more hydrogen atom from the specific examples of the alkyl groups mentioned above.

The integer in the present invention can be an integer not less than 0, and it can also be an integer from 0 to 30. Specifically, it can be 0, 1, 2, 3, 4, 5, 6, 7, 8, 9, 10, 11, 12, 13, 14, 15, 16, 17, 18, 19, 20; preferably 0, 1, 2, 3, 4, 5, 6, 7, 8, 9, 10; more preferably 0, 1, 2, 3, 4, 5.

### [Organoboron compound]

The present invention provides an organoboron compound, which has a structure as shown in formula (I): 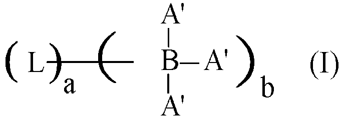 in formula (I), there are a L group(s) and b boron-containing group(s), a is an integer of 1-10 (preferably an integer of 1-5, more preferably 1, 2 or 3), b is an integer of 1-10 (preferably an integer of 1-7, more preferably 1, 2, 3, 4 or 5), each of said a L groups is identical or different from each other and each L group is independently selected from a group represented by formula (II); 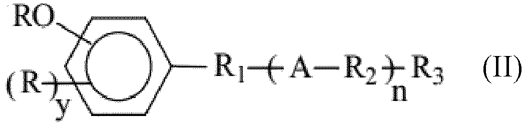 in formula (II), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from Hand C₁₋₂₀ linear or branched alkyl, preferably Hand C₁₋₁₀ linear or branched alkyl, further preferably H and C₁₋₆ linear or branched alkyl); each of A groups in n structure units is identical or different from each other and each A group is independently selected from 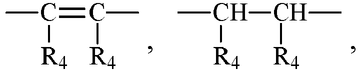 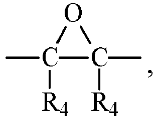 a group represented by formula (III) and a group represented by formula (IV), 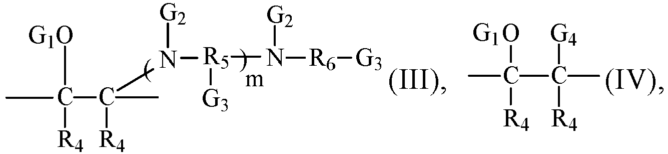
the R₄ group is each independently selected from Hand C₁₋₂₀ linear or branched alkyl (preferably each independently selected from H and C₁₋₆ linear or branched alkyl, preferably selected from H and C₁₋₄ linear or branched alkyl); m is independently an integer of 0-10 (preferably an integer of 0-5, more preferably 0, 1 or 2);
the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
each G₂ group is independently selected from a bonding end bonded to G₄ groups present in other L group(s) than the L group in which it is located, C₁₋₁₀ linear or branched alkyl, -R₆G₃, H (preferably each independently selected from a bonding end bonded to G₄ groups present in other L group(s) than the L group in which it is located, C₁₋₆ linear or branched alkyl, -R₆G₃, H, more preferably each independently selected from a bonding end bonded to G₄ groups present in other L group(s) than the L group in which it is located, C₁₋₄ linear or branched alkyl, -R₆G₃, H);
each G₃ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H);
the R₆ group is selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
G₄ group is selected from a bonding end bonded to G₂ groups present in other L group(s) than the L group in which it is located, H; in a L group(s), there is at least one A group that is a group represented by formula (III), there is at least one G₁ group that is a bonding end bonded to the boron atom in the boron-containing group;
each A' group in the b boron-containing group(s) is independently selected from a bonding end bonded to the G₁ group present in the L group, a group represented by formula (V), -OR', the R' group is H or C₁₋₂₀ linear or branched alkyl (preferably H or C₁₋₆ linear or branched alkyl, preferably H or C₁₋₄ linear or branched alkyl); 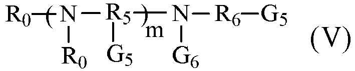
in formula (V), m is independently an integer of 0-10 (preferably an integer of 0-5, more preferably 0, 1 or 2);
the R₀ group is each independently selected from C₁₋₁₀ linear or branched alkyl, -R₆G₅, H (preferably each independently selected from C₁₋₆ linear or branched alkyl, -R₆G₅, H, preferably each independently selected from C₁₋₄ linear or branched alkyl, -R₆G₅, H);
in formula (V), the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
in formula (V), the G₆ group is selected from -R₆G₅, C₁₋₁₀ linear or branched alkyl, H (preferably selected from -R₆G₅, C₁₋₆ linear or branched alkyl, H, preferably selected from -R₆G₅, C₁₋₄ linear or branched alkyl, H);
the G₆ group is independently selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
each G₅ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H), wherein the G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
in the case that the group represented by formula (V) is present, in the group represented by formula (V), there is at least one G₁ group that is a bonding end bonded to the boron atom in the boron-containing group;
in the b boron-containing group(s), there is at least one A' group that is a bonding end bonded to the G₁ group present in the L group;
each group in the organoboron compound complies with the bonding rules.

In the present invention, the "-" between 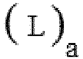 and 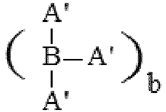 in the structure shown in formula (I) does not mean that the two structures are directly bonded, that is, the "-" here is not a chemical bond, but means that there is a connection relationship between 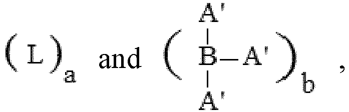 specifically, which are connected in the manner defined in this specification. In an embodiment of the present invention, in formula (I), a is an integer of 1-10, preferably an integer of 1-5, more preferably 1, 2 or 3.

In an embodiment of the present invention, L group is a group represented by formula (II); 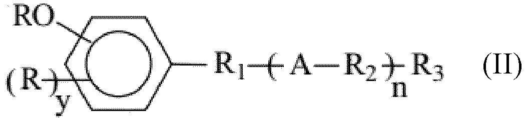 in an embodiment of the present invention, when there are multiple L groups (i.e. a>1), the a L groups may be identical or different from each other.

In an embodiment of the present invention, in formula (I), in b boron-containing groups 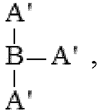 b is an integer of 1-10, preferably an integer of 1-7, more preferably 1, 2, 3, 4 or 5. When there are multiple boron-containing groups 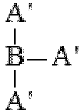 (i.e. b>1), the b boron-containing groups may be identical or different from each other.

In an embodiment of the present invention, in formula (II), RO is preferably located at the meta position of the R₁ group on the benzene ring.

In an embodiment of the present invention, in formula (II), y is selected from an integer of 0-4, preferably an integer of 1-3, more preferably 1 or 2.

In an embodiment of the present invention, the R group is each independently selected from H and C₁₋₂₀ linear or branched alkyl, preferably each independently selected from H and C₁₋₆ linear or branched alkyl, preferably each independently selected from H and C₁₋₄ linear or branched alkyl, more preferably selected from H and tert-butyl.

In an embodiment of the present invention, R in RO is preferably H; R bonded to the benzene ring is preferably each independently selected from H and C₁₋₆ linear or branched alkyl, preferably each independently selected from H and C₁₋₄ linear or branched alkyl, more preferably tert-butyl.

In an embodiment of the present invention, n is an integer of 1-10, preferably an integer of 1-5, more preferably 1, 2 or 3.

In an embodiment of the present invention, R₁ is each independently selected from a single bond and C₁₋₃₀ linear or branched alkylene, preferably selected from a single bond and C₁₋₂₀ linear or branched alkylene, preferably C₁₋₁₀ linear or branched alkylene.

In an embodiment of the present invention, each of R₂s in n structure units is identical or different from each other and each R₂ is independently selected from a single bond and C₁₋₂₀ linear or branched alkylene, preferably each independently selected from a single bond and C₁₋₆ linear or branched alkylene, more preferably each independently selected from a single bond and C₁₋₄ linear or branched alkylene.

In an embodiment of the present invention, R₃ is selected from H and C₁₋₃₀ linear or branched alkyl, preferably selected from H and C₁₋₂₀ linear or branched alkyl, more preferably H and C₁₋₁₀ linear or branched alkyl, further preferably H and C₁₋₆ linear or branched alkyl.

In an embodiment of the present invention, each of A groups in n structure units is identical or different from each other, and each A group is independently selected from 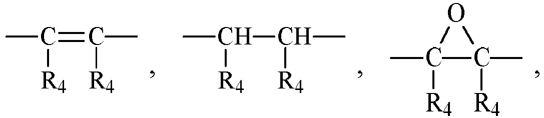 a group represented by formula (III) and a group represented by formula (IV),

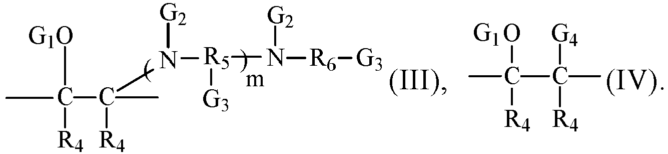

In an embodiment of the present invention, R₄ group is each independently selected from H and C₁₋₂₀ linear or branched alkyl, preferably each independently selected from H and C₁₋₆ linear or branched alkyl, more preferably selected from H and C₁₋₄ linear or branched alkyl.

In an embodiment of the present invention, m is independently an integer of 0-10, preferably an integer of 0-5, more preferably 0, 1 or 2. Here, m=0 means that 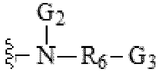 is directly bonded to 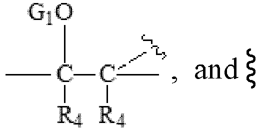 indicates the bonding position of the two.

In an embodiment of the present invention, R₅ group is each independently selected from 3-valent C₁₋₂₀ linear or branched alkyl, preferably each independently selected from 3-valent C₁₋₆ linear or branched alkyl, more preferably each independently selected from 3-valent C₁₋₄ linear or branched alkyl.

In an embodiment of the present invention, each G₂ group is independently selected from a bonding end bonded to G₄ groups present in other L group(s) than the L group in which it is located, C₁₋₁₀ linear or branched alkyl, -R₆G₃, H, preferably each independently selected from a bonding end bonded to G₄ groups present in other L group(s) than the L group in which it is located, C₁₋₆ linear or branched alkyl, -R₆G₃, H, more preferably each independently selected from a bonding end bonded to G₄ groups present in other L group(s) than the L group in which it is located, C₁₋₄ linear or branched alkyl, -ReGs, H. Here, "a bonding end bonded to G₄ groups present in other L group(s) than the L group in which it is located" means that G₂ group is a single bond, and, combined with the single bond corresponding to the G₄ group of other L groups other than this L group, that is, -G₂-G₄- forms a single bond as a whole, so that the L group can be bonded with other L groups.

In an embodiment of the present invention, each G₃ group is independently selected from -OG₁, C₁₋₁₀ linear or branched alkyl, OH, H, preferably each independently selected from -OG₁, C₁₋₆ linear or branched alkyl, OH, H, more preferably each independently selected from -OG₁, C₁₋₄ linear or branched alkyl, OH, H.

In an embodiment of the present invention, R₆ group is selected from a single bond, C₁₋₂₀ linear or branched alkylene, preferably each independently selected from a single bond, C₁₋₆ linear or branched alkylene, more preferably each independently selected from a single bond, C₁₋₄ linear or branched alkylene. In an embodiment of the present invention, G₁ group is selected from a bonding end bonded to the boron atom in the boron-containing group, C₁₋₆ linear or branched alkyl, H, preferably selected from a bonding end bonded to the boron atom in the boron-containing group, C₁₋₄ linear or branched alkyl, H. Here, "a bonding end bonded to the boron atom in the boron-containing group" means that G₁ group is a single bond, and, combined with the single bond corresponding to the A' group of the boron-containing group 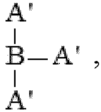 that is, -G₁-A'- forms a single bond as a whole, so that the L group can be bonded with the boron-containing group

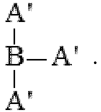

In an embodiment of the present invention, G₄ group is selected from a bonding end bonded to G₂ groups present in other L group(s) than the L group in which it is located, H. Here, "a bonding end bonded to G₂ groups present in other L group(s) than the L group in which it is located" means that G₄ group is a single bond, and, combined with the single bond corresponding to the G₂ group of other L groups other than this L group, that is, -G₂-G₄- forms a single bond as a whole, so that the L group can be bonded with other L groups.

In an embodiment of the present invention, in a L group(s), there is at least one A group that is a group represented by formula (III), there is at least one G₁ group that is a bonding end bonded to the boron atom in the boron-containing group.

In the present invention, in the structure represented by formula (I), there is at least one A group that is a group represented by formula (III), thus, the structure shown in formula (I) has a nitrogen-containing group; there is at least one G₁ group that is a bonding end bonded to the boron atom in the boron-containing group, thus, the structure shown in formula (I) has the boron-containing group

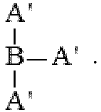

In an embodiment of the present invention, each A' group in the b boron-containing group(s) 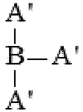 is each independently selected from a bonding end bonded to the G₁ group present in the L group, a group represented by formula (V), -OR'.

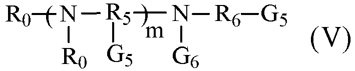

Here, " a bonding end bonded to the G₁ group present in the L group " means that A' group in the boron-containing group 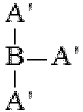 is a single bond, and, combined with the single bond corresponding to the G₁ group of the L group, that is, -G₁-A'- forms a single bond as a whole, so that the boron-containing group 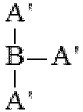 can be bonded with the L group.

In an embodiment of the present invention, R' group is H or C₁₋₂₀ linear or branched alkyl, preferably H or C₁₋₆ linear or branched alkyl, more preferably H or C₁₋₄ linear or branched alkyl.

In the present invention, m, R₅ group and R₆ group in the structure represented by formula (V) and m, R₅ group and R₆ group in the structure represented by formula (III) are independent of each other, that is, in the organoboron compound represented by formula (I) of the present invention, each occurrence of m, each occurrence of R₅ group, and each occurrence of R₆ group are independent of each other.

In an embodiment of the present invention, in formula (V), m is independently an integer of 0-10, preferably an integer of 0-5, more preferably 0, 1 or 2. Here, in the case that m is 0, the R₀- moiety is directly bonded to the 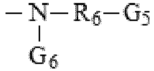 moiety.

In an embodiment of the present invention, R₀ group is each independently selected from C₁₋₁₀ linear or branched alkyl, -R₆G₅, H, preferably each independently selected from C₁₋₆ linear or branched alkyl, -R₆G₅, H, more preferably each independently selected from C₁₋₄ linear or branched alkyl, - R₆G₅, H.

In an embodiment of the present invention, in formula (V), the R₅ group is each independently selected from 3-valent C₁₋₂₀ linear or branched alkyl, preferably each independently selected from 3-valent C₁₋₆ linear or branched alkyl, more preferably each independently selected from 3-valent C₁₋₄ linear or branched alkyl.

In an embodiment of the present invention, in formula (V), the G₆ group is selected from -R₆G₅, C₁₋₁₀ linear or branched alkyl, H, preferably selected from -R₆G₅, C₁₋₆ linear or branched alkyl, H, more preferably selected from -R₆G₅, C₁₋₄ linear or branched alkyl, H.

In an embodiment of the present invention, R₆ group is independently selected from a single bond, C₁₋₂₀ linear or branched alkylene, preferably each independently selected from a single bond, C₁₋₆ linear or branched alkylene, more preferably each independently selected from a single bond, C₁₋₄ linear or branched alkylene.

In an embodiment of the present invention, each G₅ group is independently selected from -OG₁, C₁₋₁₀ linear or branched alkyl, OH, H, preferably each independently selected from -OG₁, C₁₋₆ linear or branched alkyl, OH, H, more preferably each independently selected from -OG₁, C₁₋₄ linear or branched alkyl, OH, H. Here, G₁ group is selected from a bonding end bonded to the boron atom in the boron-containing group, C₁₋₆ linear or branched alkyl, H, preferably selected from a bonding end bonded to the boron atom in the boron-containing group, C₁₋₄ linear or branched alkyl, H. Here, "a bonding end bonded to the boron atom in the boron-containing group" means that G₁ group is a single bond, and, combined with the single bond corresponding to the A' group of the boron-containing group 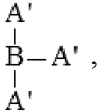 that is, -G₁-A'- forms a single bond as a whole, so that the L group can be bonded with the boron-containing group

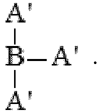

In the present invention, in the case that the group represented by formula (V) is present, in the group represented by formula (V), there is at least one G₁ group that is a bonding end bonded to the boron atom in the boron-containing group, so that the structure represented by formula (V) is bonded to the boron-containing group

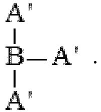

In the present invention, in the b boron-containing group(s), there is at least one A' group that is a bonding end bonded to the G₁ group present in the L group, so that in the compound represented by formula (I), the boron-containing group is present.

In an embodiment of the present invention, the group represented by formula (II) is a group represented by formula (II').

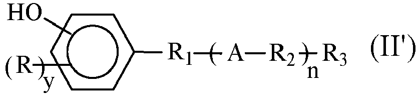

In the present invention, the bonding manner in the L group of the structure represented by formula (III) and the structure represented by formula (IV) is not particularly limited, and it can be bonded to R₂ at any end. For example, formula (III) or formula (IV) can be bonded to the R₂ group at one end, or can be bonded to the R₂ group at the other end.

According to the present invention, examples of the organoboron compound that can be enumerated include one or more of the following structural compounds: 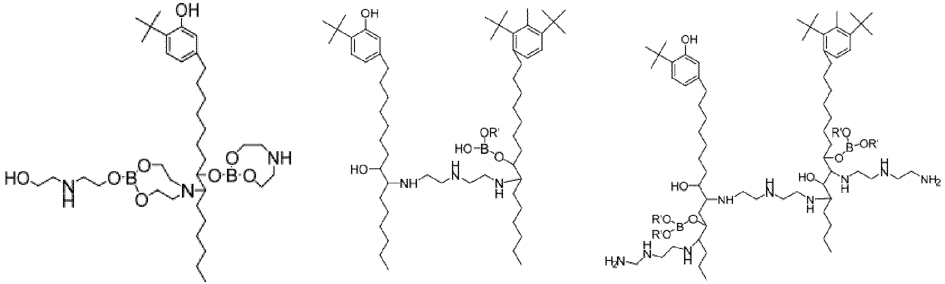 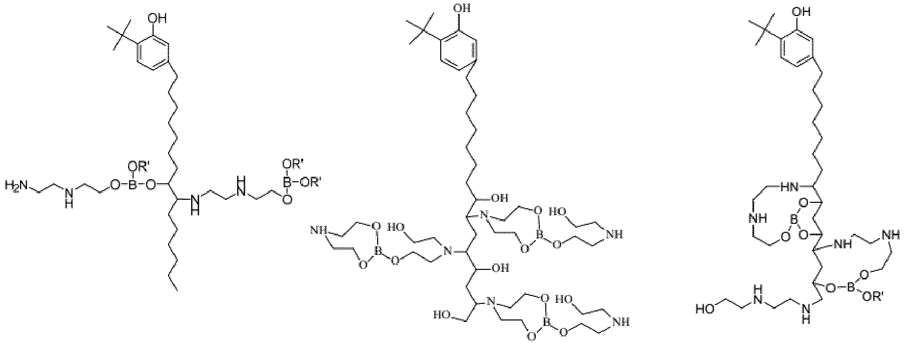 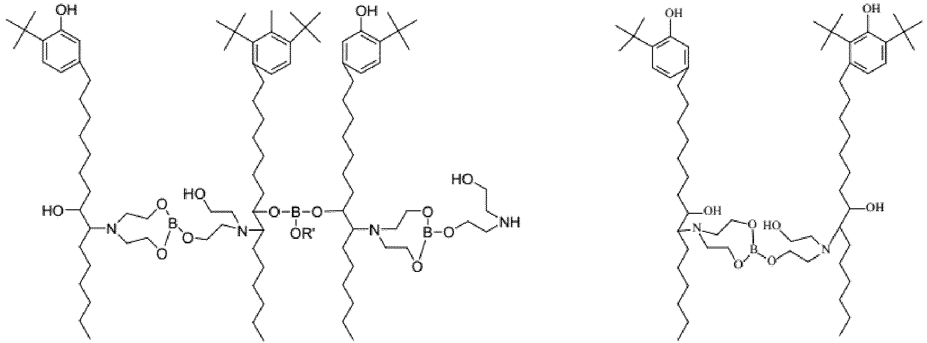 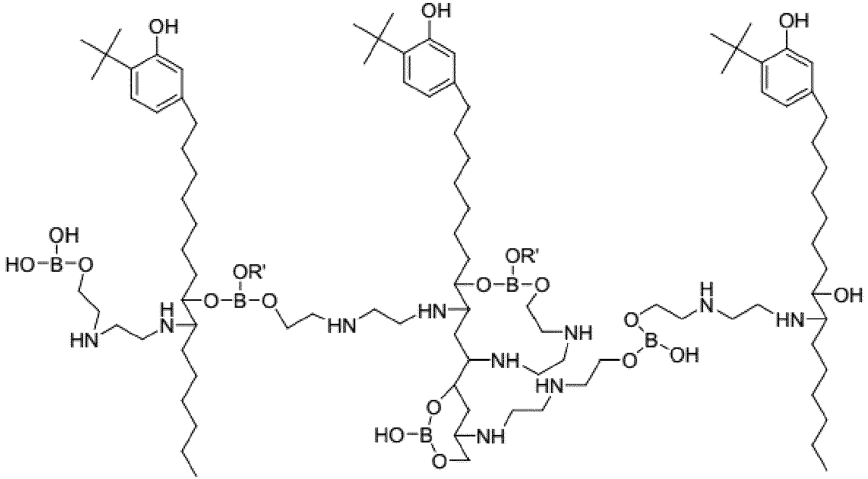 wherein R' group is H or C₁-C₂₀ linear or branched alkyl.

In an embodiment of the present invention, R' group is preferably H or C₁₋₆ linear or branched alkyl, more preferably H or C₁₋₄ linear or branched alkyl.

### [Preparation method of organoboron compound]

The present invention provides a process for preparing an organoboron compound, which comprises the following steps:
(1) reacting a compound represented by formula (X) with a peroxide; 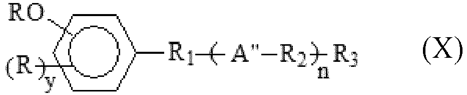 in formula (X), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from Hand C₁₋₂₀ linear or branched alkyl, preferably Hand C₁₋₁₀ linear or branched alkyl, further preferably H and C₁₋₆ linear or branched alkyl); A"s in n structural units are identical or different from each other and each independently selected from 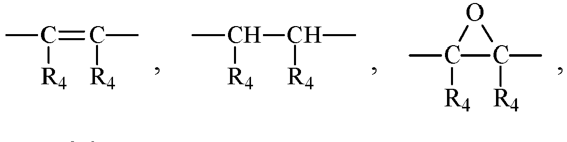 wherein the R₄ group is each independently selected from H and C₁₋₂₀ linear or branched alkyl (preferably each independently selected from H and C₁₋₆ linear or branched alkyl, preferably selected from Hand C₁₋₄ linear or branched alkyl); in formula (X) there is at least one A" that is 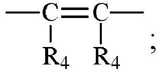
(2) reacting the reaction product of step (1) with a compound represented by formula (Y); 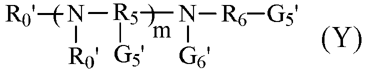
   in formula (Y), m is an integer of 0-10 (preferably an integer of 0-5, more preferably 0, 1 or 2);
   the R₀' group is each independently selected from C₁₋₁₀ linear or branched alkyl, -R₆OH, H (preferably each independently selected from C₁₋₆ linear or branched alkyl, -R₆OH, H, preferably each independently selected from C₁₋₄ linear or branched alkyl, -R₆OH, H);
   the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
   each G₅' group is independently selected from C₁₋₁₀ linear or branched alkyl, OH, H (preferably each independently selected from C₁₋₆ linear or branched alkyl, OH, H, more preferably independently selected from C₁₋₄ linear or branched alkyl, OH, H);
   G₆' group is selected from C₁₋₁₀ linear or branched alkyl, -R₆OH, H (preferably selected from -R₆OH, C₁₋₆ linear or branched alkyl, H, preferably selected from -R₆OH, C₁₋₄ linear or branched alkyl, H);
   the R₆ group is each independently selected from a single bond, C₁₋₂₀ linear or branched alkylene (preferably each independently selected from a single bond, C₁₋₆ linear or branched alkylene, preferably each independently selected from a single bond, C₁₋₄ linear or branched alkylene);
   in formula (Y), at least one of R₀' group and G₆' group is H, and optionally at least one G₅' group is OH and/or at least one G₆' group and/or at least one R₀' group is -R₆OH;
(3) reacting the reaction product of step (2) with an inorganic boron compound to obtain an organoboron compound.

In an embodiment of the present invention, in formula (X), RO is bonded to the benzene ring, RO is preferably located at the meta position of the R₁ group on the benzene ring.

In an embodiment of the present invention, y is selected from an integer of 0-4, preferably an integer of 1-3, more preferably 1 or 2.

In an embodiment of the present invention, the R group is each independently selected from H and C₁₋₂₀ linear or branched alkyl, preferably each independently selected from H and C₁₋₆ linear or branched alkyl, more preferably each independently selected from H and C₁₋₄ linear or branched alkyl, more preferably selected from H and tert-butyl.

In an embodiment of the present invention, n is an integer of 1-10, preferably an integer of 1-5, more preferably 1, 2 or 3.

In an embodiment of the present invention, R₁ is each independently selected from a single bond and C₁₋₃₀ linear or branched alkylene, preferably selected from a single bond and C₁₋₂₀ linear or branched alkylene, more preferably C₁₋₁₀ linear or branched alkylene.

In an embodiment of the present invention, each of R₂s in n structure units is identical or different from each other and each R₂ is independently selected from a single bond and C₁₋₂₀ linear or branched alkylene, preferably each independently selected from a single bond and C₁₋₆ linear or branched alkylene, more preferably each independently selected from a single bond and C₁₋₄ linear or branched alkylene.

In an embodiment of the present invention, R₃ is selected from H and C₁₋₃₀ linear or branched alkyl, preferably selected from H and C₁₋₂₀ linear or branched alkyl, more preferably H and C₁₋₁₀ linear or branched alkyl, further preferably H and C₁₋₆ linear or branched alkyl.

In an embodiment of the present invention, A"s in n structural units are identical or different from each other and each independently selected from

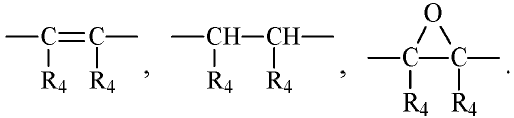

In an embodiment of the present invention, R₄ group is each independently selected from H and C₁₋₂₀ linear or branched alkyl, preferably each independently selected from H and C₁₋₆ linear or branched alkyl, more preferably selected from H and C₁₋₄ linear or branched alkyl.

In the present invention, in formula (X) there is at least one A" that is 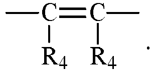 By the presence of at least one double bond group 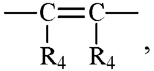 this double bond group is converted into an epoxy group in step (1).

In an embodiment of the present invention, in formula (Y), m is an integer of 0-10, preferably an integer of 0-5, more preferably 0, 1 or 2. Here, in the case that m is 0, 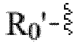 is directly bonded to 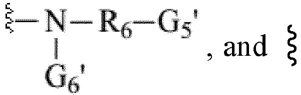 represents the bonding position of the two.

In an embodiment of the present invention, R₀' group is each independently selected from C₁₋₁₀ linear or branched alkyl, -R₆OH, H, preferably each independently selected from C₁₋₆ linear or branched alkyl, -R₆OH, H, more preferably each independently selected from C₁₋₄ linear or branched alkyl, - R₆OH, H.

In an embodiment of the present invention, R₅ group is each independently selected from 3-valent C₁₋₂₀ linear or branched alkyl, preferably each independently selected from 3-valent C₁₋₆ linear or branched alkyl, more preferably each independently selected from 3-valent C₁₋₄ linear or branched alkyl.

In an embodiment of the present invention, each G₅' group is independently selected from C₁₋₁₀ linear or branched alkyl, OH, H, preferably each independently selected from C₁₋₆ linear or branched alkyl, OH, H, more preferably independently selected from C₁₋₄ linear or branched alkyl, OH, H. In an embodiment of the present invention, G₆' group is selected from C₁₋₁₀ linear or branched alkyl, -R₆OH, H, preferably selected from -R₆OH, C₁₋₆ linear or branched alkyl, H, more preferably selected from -R₆OH, C₁₋₄ linear or branched alkyl, H.

In an embodiment of the present invention, the R₆ group is each independently selected from a single bond, C₁₋₂₀ linear or branched alkylene, preferably each independently selected from a single bond, C₁₋₆ linear or branched alkylene, more preferably each independently selected from a single bond, C₁₋₄ linear or branched alkylene.

In an embodiment of the present invention, in formula (Y), at least one of R₀' group and G₆' group is H. Here, at least one of R₀' group and G₆' group is H, so there is at least one -NH group or -NH₂ group in formula Y, and the -NH group or -NH₂ group can perform a ring-opening reaction with the epoxy group on the product of step (1).

In an embodiment of the present invention, optionally at least one G₅' group is OH and/or at least one G₆' group and/or at least one R₀' group is -R₆OH. That is, here, at least one of G₅' group being OH, G₆' group being -R₆OH, R₀' group being -R₆OH is met. In this case, in the compound represented by formula Y, in addition to the -NH group or -NH₂ group, it also has an -OH group, which can react with the inorganic boron compound in step (3).

In an embodiment of the present invention, in step (3), reacting the reaction product of step (2) with an inorganic boron compound to obtain an organoboron compound. Here, the boron compound reacts with the hydroxyl group (-OH) in the reaction product of step (2), and is bonded to the structure of the reaction product of step (2) in the form of a borate ester group.

In an embodiment of the present invention, it further comprises step (4), wherein the reaction product of step (3) and a compound represented by formula (Y') are reacted to produce an organoboron compound.

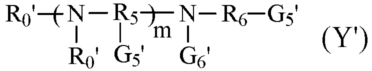

In the present invention, in step 4, R₀', m, R₅, R₆, G₅' and G₆' in the compound with the structure represented by formula (Y') and R₀', m, R₅, R₆, G₅' and G₆' in the compound with the structure represented by formula (Y) are independent of each other. In other words, when the preparation method of the present invention has step (4), each occurrence of R₀', m, R₅, R₆, G₅' and G₆' is independent of those groups in the compound represented by formula (Y) in step (2).

In an embodiment of the present invention, in formula (Y'), m is an integer of 0-10, preferably an integer of 0-5, more preferably 0, 1 or 2.

In an embodiment of the present invention, in formula (Y'), R₀' group is each independently selected from C₁₋₁₀ linear or branched alkyl, -R₆OH, H, preferably each independently selected from C₁₋₆ linear or branched alkyl, - R₆OH, H, more preferably each independently selected from C₁₋₄ linear or branched alkyl, -R₆OH, H.

In an embodiment of the present invention, in formula (Y'), R₅ group is each independently selected from 3-valent C₁₋₂₀ linear or branched alkyl, preferably each independently selected from 3-valent C₁₋₆ linear or branched alkyl, more preferably each independently selected from 3-valent C₁₋₄ linear or branched alkyl.

In an embodiment of the present invention, in formula (Y'), each G₅' group is independently selected from C₁₋₁₀ linear or branched alkyl, OH, H, preferably each independently selected from C₁₋₆ linear or branched alkyl, OH, H, more preferably independently selected from C₁₋₄ linear or branched alkyl, OH, H. In an embodiment of the present invention, in formula (Y'), G₆' group is selected from C₁₋₁₀ linear or branched alkyl, -R₆OH, H, preferably selected from -R₆OH, C₁₋₆ linear or branched alkyl, H, more preferably selected from - R₆OH, C₁₋₄ linear or branched alkyl, H.

In an embodiment of the present invention, in formula (Y'), R₆ group is each independently selected from a single bond, C₁₋₂₀ linear or branched alkylene, preferably each independently selected from a single bond, C₁₋₆ linear or branched alkylene, more preferably each independently selected from a single bond, C₁₋₄ linear or branched alkylene.

In an embodiment of the present invention, in formula (Y'), at least one G₅' group is OH and/or at least one G₆' group and/or at least one R₀' group is - R₆OH. That is, here, at least one of G₅' group being OH, G₆' group being - R₆OH, R₀' group being -R₆OH is met. In this case, the -OH group can occur in step (4) with the borate ester group in the product of step (3), so that the group derived from formula (Y') is bonded to the boron atom.

In an embodiment of the present invention, the compound represented by formula (Y') is preferably the same as the compound represented by formula (Y).

In an embodiment of the present invention, the compound represented by formula (X) is the following formula (X'),

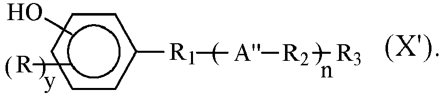

In an embodiment of the present invention, in step (1), the compound represented by formula (X) can be selected from cardanol and alkylated cardanol. The alkylated cardanol can be obtained by reacting cardanol with an alkylating agent. For example, tert-butylated cardanol can be obtained by reacting cardanol with tert-butyl chloride.

Cardanol is the main component of cashew nutshell oil. It is a natural phenolic compound and an important agricultural and sideline product in cashew nut production. It has wide sources and huge reserves. Using such natural compounds with abundant sources and low cost as raw materials to synthesize friction modifiers with better performance than existing products meets the requirements of green chemistry and the strategic requirements of sustainable development.

In an embodiment of the present invention, the structure of cardanol can be shown as follows: 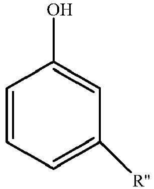 wherein R" is C₁₅H₍₃₁₊ₓ₎, x is 0, -2, -4 or -6.

In an embodiment of the present invention, no unsaturated double bond is present in a long chain of R" being C₁₅H₍₃₁₊ₓ₎. In an embodiment of the present invention, one unsaturated double bond is present in a long chain of R" being C₁₅H₍₃₁₊ₓ₎ (i.e., X is -2). In an embodiment of the present invention, two unsaturated double bonds are present in a long chain of R" being C₁₅H₍₃₁₊ₓ₎ (i.e., X is -4). In an embodiment of the present invention, three unsaturated double bonds are present in a long chain of R" being C₁₅H₍₃₁₊ₓ₎ (i.e., X is -6). In an embodiment of the present invention, the long chain of R" being C₁₅H₍₃₁₊ₓ₎ is a carbon chain containing 0-3 olefinic bonds and 15 carbon atoms, wherein an olefinic bond is present at at least one of the 8, 11 and 14 positions.

In an embodiment of the present invention, alkylated cardanol refers to introducing alkyl into the benzene ring of cardanol by reacting cardanol with an alkylation agent. Alkylation methods can be those methods known in the art.

In an embodiment of the present invention, the preparation method of the organoboron compound of the present invention further comprises step (1'), wherein,
before step (1), step (1') is carried out, wherein, a compound represented by formula (X-1) and an alkylation agent are reacted to produce a compound represented by formula (X) (wherein, y is not zero); 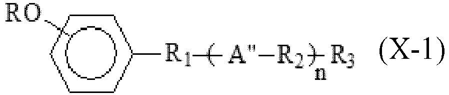 or,
after step (1), step (1') is carried out, wherein, the product of step (1) and an alkylation agent are reacted to produce an alkylation product in which the benzene ring in the product of step (1) is alkylated, and the alkylation product is used in the reaction of step (2). Alkylation methods and alkylation agents may be those methods and reagents well known in the art.

In an embodiment of the present invention, the alkylation in step (1') is tert-butylation.

In an embodiment of the present invention, alkylated cardanol includes cardanol in which an alkyl is introduced to the ortho position of the phenolic hydroxyl group, and preferably includes cardanol that a tert-butyl is introduced to the ortho position of the phenolic hydroxyl group.

According to the present invention, in step (1), the peroxide is preferably one or more of hydrogen peroxide, peroxyformic acid, peracetic acid, peroxysulfonic acid, m-chloroperbenzoic acid, tert-butyl hydrogen peroxide, tert-butyl peracetate, methyl ethyl ketone peroxide, dibenzoyl peroxide, and cyclohexanone peroxide, more preferably one or more of hydrogen peroxide, peroxyformic acid, peracetic acid, and peroxysulfonic acid.

According to the present invention, in step (1), a catalyst can be optionally added, preferably a catalyst is added. The catalyst is preferably an inorganic acid, for example one or more of sulfuric acid, hydrochloric acid, phosphoric acid, nitric acid, heteropolyacid, and solid acid.

According to the present invention, in step (2), the compound represented by formula (Y) can be one or more of aliphatic amines, polyalkylene polyamines, one or more hydroxy groups-substituted aliphatic amines, and one or more hydroxy groups-substituted polyalkylene polyamines, for example one or more of ethanolamine, diethanolamine, hydroxyethylethylenediamine (i.e., N-(2-hydroxyethyl)ethylenediamine), diethylenetriamine, triethylenetetramine, tetraethylenepentamine, and pentaethylenehexamine.

According to the present invention, in step (2), a catalyst may be used. The catalyst may be protic acids such as sulfuric acid, phosphoric acid, benzenesulfonic acid, and heteropolyacid, and Lewis acids such as phthalate esters, and metal oxides. It is preferably one or more of sulfuric acid, phosphoric acid, benzenesulfonic acid, and phthalate esters.

According to the present invention, in step (3), the inorganic boron compound is preferably one or more of boric acid, boron oxide, tetraboric acid (i.e., H₂B₄O₇), metaboric acid (i.e., HBOz), and boric acid partial ester. The boric acid partial ester can be mono-alkyl borate, di-alkyl borate, wherein the alkyl is C₁-C₂₀ linear or branched alkyl.

In an embodiment of the present invention, while the reaction in step (3) is carried out, the reaction in step (4) can also be carried out at the same time, that is, the compound represented by formula (Y) is further reacted with the product of step (3), so that -OH in the compound represented by formula (Y) is reacted with the boron-containing group 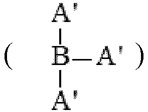 in the product of step (3) to bond to the organoboron compound.

In the present invention, since the epoxidation reaction in step (1), the ring-opening reaction using a nucleophile (the compound represented by formula (Y)) in step (2), the esterification reaction with the inorganic boron compound in step (3), and the reaction of boric acid (ester) and hydroxyl-containing reactant (the compound represented by formula (Y) or the compound represented by formula (Y')) in step (4) are all well-known reactions in the art, therefore the usage ratio of raw materials and the reaction conditions can be those conventional usage ratios and reaction conditions in the art.

In an embodiment of the present invention, the equivalent ratio of the compound represented by formula (X), the peroxide, the compound represented by formula (Y), and the inorganic boron compound can be adjusted as needed. In an embodiment of the present invention, the equivalent ratio of the compound represented by formula (X), the peroxide, the compound represented by formula (Y), and the inorganic boron compound can be 1:0.5-10:0.5-10:0.5-5, preferably 1:2-3:2-3:1-2.

In an embodiment of the present invention, in the case that step (4) is performed, the equivalent ratio of the compound represented by formula (X), the peroxide, the compound represented by formula (Y), the inorganic boron compound, and the compound represented by formula (Y') can be 1:0.5-10:0.5-10:0.5-5:0.5-10, preferably 1:2-3:2-3:1-2:2-3.

In an embodiment of the present invention, the reaction temperature of step (1) is preferably 0-100°C, more preferably 20-80°C; the reaction temperature of step (2) is preferably 50-150°C, more preferably 60-100°C; the reaction temperature of step (3) is preferably 80-200°C, more preferably 110-150°C; the reaction temperature of step (4) is preferably 50-150°C, more preferably 60-100°C.

In an embodiment of the present invention, the longer the reaction times of step (1), step (2), step (3), and step (4), generally the better. In general, the reaction time of step (1) is preferably 1-10h, more preferably 3-5h; the reaction time of step (2) is preferably 1-10h, more preferably 2-4h; the reaction time of step (3) is preferably 1-10h, more preferably 3-5h; the reaction time of step (4) is preferably 1-10h, more preferably 2-4h.

In an embodiment of the present invention, the reaction step (1), (2), (3) or (4) can be carried out in the presence of a diluent and/or solvent, or without the use of a diluent and/or solvent. According to the present invention, the diluent can be one or more of API I, II, III, IV and V base oils. Common products or brands include 150SN, 200SN, 350SN, 500SN, 650SN, 150BS, HVI-100, HVI-150, HVI-200, HVI-350, HVI-400, HVI-500, HVI-150BS, PAO4, PAO6, PAO8, PAO10, alkylbenzene, alkylnaphthalene, and the like.

According to the present invention, the solvent can be ketones (such as acetone, butanone, methyl ethyl ketone), C₆₋₂₀ aromatic hydrocarbons (such as benzene, toluene, xylene and cumene), C₆₋₁₀ alkanes (such as n-hexane, cyclohexane, and petroleum ether), solvent gasoline, and the like. These solvents may be used alone or in combination of two or more. After the reaction is completed, the solvent can be removed by evaporation using methods known to those skilled in the art, e.g. under normal pressure or reduced pressure.

According to an embodiment of the present invention, the diluent and/or solvent can be added at any stage of reaction steps in accordance with conventional amounts in the art without particular limitation.

In an embodiment of the present invention, each of the reaction steps can be performed under the protection of an inert gas atmosphere. Examples of the inert gas include nitrogen gas, argon gas, and the like, but are not particularly limited.

In an embodiment of the present invention, in step (3), an accelerator that promotes the completion of the reaction can be added. Common accelerators include water, ethanol, propanol, butanol, ammonia, etc. If an accelerator is added, it can be removed after the reaction is completed using methods known to those skilled in the art, such as evaporation under normal pressure or reduced pressure.

According to the present invention, with the aforementioned process for preparing the organoboron compound, a single organoboron compound can be produced as the reaction product, or a mixture composed of a plurality of organoboron compounds (i.e., the organoboron compound of the present invention may be present as a mixture of a plurality of structurally different organoboron compounds), or a mixture of one or more of said organoboron compounds and the aforementioned diluents (if used) can be produced. These reaction products are all expected by the present invention, and their different existence forms do not affect the realization of the effects of the present invention. Therefore, in the context of the description, these reaction products are collectively referred to as the organoboron compound without distinction. In view of this, according to the present invention, there is no absolute necessity to further purify the reaction product or further separate an organoboron compound of a specific structure from the reaction product. Of course, the purification or separation is preferred for further improving the expected effects of the present invention, but is not necessary for the present invention. Nonetheless, examples of the purification or separation method include the purification or separation of the reaction product by column chromatography, preparative chromatography, or the like.

According to the present invention, in the preparation method of the organoboron compound, the reaction product can be an organoboron compound with a single structure or a mixture of organoboron compounds containing multiple structures (that is, the organoboron compound of the present invention may be present as a mixture of a plurality of structurally different organoboron compounds). These reaction products are all expected by the present invention, and their different existence forms do not affect the realization of the effects of the present invention. Therefore, in the context of the description, these reaction products are collectively referred to as the organoboron compound without distinction. In particular, for the cardanol, in the carbon chains of the cardanol in which R" has 15 carbons, an olefinic bond occurs at at least one position at positions 8, 11 and 14. For example, in the cardanol as a natural product, the proportions of saturated and unsaturated cardanols in the cardanol are: cardanol with three olefinic bonds comprises about 41%, cardanol with two olefinic bonds comprises about 22%, and cardanol with one olefinic bond comprises about 34%, the rest is the saturated cardanol. Therefore, when the cardanol is used, the reaction raw material is a mixture, and the obtained organoboron compound is also a mixture of organoboron compounds having multiple structures (i.e., a mixed composition of organoboron compound described below in the present description).

In view of this, according to the present invention, there is no absolute necessity to further purify the reaction products or to further separate an organoboron compound of a specific structure from these reaction products. Of course, this purification or separation is sometimes preferred to further improve the expected effects of the present invention but is not necessary for the present invention. Nonetheless, examples of the purification or separation method include purification or separation of the reaction product by methods such as washing, filtration, distillation, recrystallization, column chromatography, and preparative chromatography.

According to the present invention, in the preparation method of the organoboron compound, after the reaction step is completed, volatile substances such as solvents that are possibly present are removed from the reaction mixture obtained in this step by conventionally known separation methods (such as evaporation, etc.) to obtain the reaction product of this step. Therefore, the present invention also provides a mixed composition of the organoboron compound, which contains the above-mentioned organoboron compound of the present invention, wherein the organoboron compound may be an organoboron compound with a single structure, or a mixture of a plurality of organoboron compounds with different structures.

The mixed composition of the organoboron compound of the present invention may optionally contain a dispersion medium for dispersing the organoboron compound. The mixed composition of the organoboron compound of the present invention may contain one organoboron compound or a plurality of organoboron compounds.

The mixed composition of the organoboron compound of the present invention may further contain other lubricating oil additives. The lubricating oil additives may be conventional lubricating oil additives in the art, including but not limited to antioxidants, antiwear agents, and friction reducers. There is no limitation on the proportion of other lubricating oil additives relative to the mixed composition of organoboron compound, and the lower limit thereof may be 1wt%, 5wt%, 10wt%, 15wt%, 20wt%, 25wt%, 30wt%, 35wt%, 40wt% or 45wt%, and the upper limit thereof can be 95wt%, 90wt%, 85wt%, 80wt%, 75wt%, 70wt%, 65wt%, 60wt%, 55wt% or 50wt%.

The mixed composition of the organoboron compound of the present invention exhibits an excellent synergistic effect by further containing the above-mentioned other lubricating oil additives.

In an embodiment of the present invention, the mixed composition of the organoboron compound of the invention contains the organoboron compound of the invention and at least one antioxidant. The antioxidant is preferably an amine-type antioxidant, more preferably p,p'-diisooctyl diphenylamine.

### [Lubricating oils/lubricating greases]

The organoboron compound of the present invention can be used as antioxidants, antiwear agents, friction reducers for lubricating oils.

The organoboron compound of the present invention can be used in lubricating oils and lubricating greases. The lubricating oil of the present invention includes a base oil and the above-mentioned organoboron compound of the present invention. The lubricating grease of the present invention includes a base oil and the above-mentioned organoboron compound of the present invention.

In the present invention, the base oil of the lubricating oil is not particularly limited, and mineral oil, synthetic oil, or a mixture of mineral oil and synthetic oil can be used. The viscosity index of the base oil is preferably 122 or more, more preferably 123 or more, and still more preferably 125 or more. Examples of mineral oils include paraffin-based mineral oils, intermediate-based mineral oils, naphthene-based mineral oils and the like obtained by common refining methods such as solvent refining and hydrorefining; waxes produced by the Fischer-Tropsch process (GTL (Gas to Liquid) waxes), wax isomerization oil produced by isomerizing wax such as mineral oil wax; and the like.

Examples of synthetic oils include hydrocarbon-based synthetic oils, ether-based synthetic oils, and the like. Examples of hydrocarbon-based synthetic oils include alkylbenzene, alkylnaphthalene, and the like. Examples of ether-based synthetic oils include polyoxyalkylene glycol, polyphenyl ether, and the like.

Among them, at least one selected from the group consisting of mineral oils and synthetic oils classified into Groups 3 to 5 of API (American Petroleum Institute) base oil types is preferred from the viewpoint of saving the fuel consumption and improving low-temperature starting performance of the engine.

The base oil may be a single system using one of the above-mentioned mineral oils and synthetic oils, or maybe a base oil in which two or more types of mineral oils are mixed, a base oil in which two or more types of synthetic oils are mixed, a mixed system such as a base oil composed of each one or more of mineral oils and synthetic oils.

In the present invention, the base oil of lubricating greases is not particularly limited, and examples thereof include mineral oil-based base oils and synthetic base oils commonly used for producing lubricating greases. They can be used alone or in the form of mixtures.

As mineral oil-based base oils, a base oil obtained by appropriately combining vacuum distillation, solvent deasphalting, solvent extraction, hydrocracking, solvent dewaxing, sulfuric acid washing, clay refining, and hydrorefining can be used. In addition, examples of synthetic base oils include poly-α-olefin (PAO) base oils, other hydrocarbon base oils, ester base oils, alkyldiphenyl ether base oils, and polyalkylene glycols base oils (PAG), alkylbenzene base oils, etc.

The present invention provides a lubricating oil composition, which contains the above-mentioned organoboron compound of the present invention and a lubricating oil base oil, wherein the organoboron compound comprises 0.001%-100%, preferably 0.005%-90%, more preferably 0.01%-50%, further optionally 0.05%-30%, further optionally 0.1%-25%, further optionally 0.5%-20% by weight of the lubricating oil composition.

According to the present invention, the lubricating oil composition may also contain other components. As the other components, for example, various additives allowed to be added in lubricating oil compositions in the art can be enumerated. Specific examples include phenol-, amine- or sulfur-phosphorus-based antioxidants; carboxylate-, sulfonate- or alkyl phenate-based detergents; succinimide-based ashless dispersant; polyester-, polyolefin- or alkyl naphthalene-based pour point depressant; methacrylate copolymer, ethylene propylene copolymer, polyisobutylene- or hydrogenated styrene/butadiene copolymer-based viscosity index improver; sulfur/phosphorus-based friction modifier; sulfur/phosphorus-containing, boric acid-based extreme pressure agent; or silicon-based, non-silicon-based antifoaming agent; and the like. The types and amounts of these additives are well known to those skilled in the art and will not be described in detail herein. Those additives may be used alone or in a combination of two or more thereof at any ratio.

The organoboron compound of the present invention has both excellent antioxidant properties and anti-wear and friction-reducing properties, can significantly improve the anti-wear and friction-reducing properties of lubricating oils, and can greatly increase the oxidation induction period of lubricating oils. The organoboron compound of the present invention can be used as antioxidants, antiwear agents, friction reducers for lubricating oils. The preparation method of the organoboron compound of the present invention has simple steps and a high conversion rate in the reaction process.

### Examples

The present invention will be further described below through examples, but they are not intended to limit the invention.

The main raw materials used are as follows:
cardanol, Shanghai Wing Science and Technology Co., Ltd., industrial product zinc chloride, Sinopharm Chemical Reagent Co., Ltd., analytically pure concentrated sulfuric acid, Sinopharm Chemical Reagent Co., Ltd., analytically pure
hydrogen peroxide (30%), Sinopharm Chemical Reagent Co., Ltd., analytically pure
formic acid, Sinopharm Chemical Reagent Co., Ltd., analytically pure boric acid, Sinopharm Chemical Reagent Co., Ltd., chemically pure diethanolamine, Sinopharm Chemical Reagent Co., Ltd., chemically pure diethylenetriamine, Sinopharm Chemical Reagent Co., Ltd., chemically pure ethanolamine, Sinopharm Chemical Reagent Co., Ltd., chemically pure N-(2-hydroxyethyl)ethylenediamine, Sinopharm Chemical Reagent Co., Ltd., chemically pure
dodecanol, Sinopharm Chemical Reagent Co., Ltd., chemically pure tert-butyl chloride, Sinopharm Chemical Reagent Co., Ltd., analytically pure antioxidantsT501, Xing Pu company of Sinopec Research Institute of Petroleum Processing, industrial product
antioxidantsT512, Xing Pu company of Sinopec Research Institute of Petroleum Processing, industrial product
cetyl alcohol, Sinopharm Chemical Reagent Co., Ltd., chemically pure tricresyl phosphate (TCP), Sinopharm Chemical Reagent Co., Ltd., chemically pure
diisooctyl sebacate, Beijing No. 3 Chemical Plant, industrial product

### Example 1: Preparation of tert-butylated epoxy cardanol

Cardanol (100g), formic acid (8g), sulfuric acid (0.3g), and hydrogen peroxide (200g) were added to a three-necked flask equipped with mechanical stirring, reflux condenser and temperature control. The stirring and heating was started. The reaction temperature was maintained at 70°C and the reaction was carried out for 3 hours. After the reaction was completed, the temperature was lowered to obtain a brown-red transparent liquid. The reaction product was filtered and alkali-washed with 5% KOH solution, and then washed with distilled water until neutral. The organic phase was distilled under reduced pressure at 100 Pa and 150°C for 1 hour to remove the moisture and unreacted raw materials to produce epoxidized cardanol as an orange-red transparent liquid. Epoxidized cardanol (35g) was dissolved in acetone (100ml). After dissolving, the resulting solution was placed in a three-neck reaction flask (250ml). The catalyst zinc chloride (0.9g) was added. The stirring and heating was started. The reaction temperature was maintained at 60°C. Tert-butyl chloride (9.5g) was slowly added dropwise to the reaction flask. After the completion of the dropwise addition, the reaction was continued for 3 hours. After the reaction was completed, the temperature was lowered to obtain a brown-red transparent liquid. The reaction product was filtered and alkali-washed with 5% KOH solution, then washed with distilled water until neutral, and distilled under reduced pressure at 1000 Pa and 120°C for 1 hour to remove the solvent, the moisture and unreacted raw materials to produce tert-butylated epoxy cardanol (brown-red viscous liquid).

Taking cardanol with an olefinic bond at position 8 as an example, the exemplary reaction scheme of the above reaction is as follows.

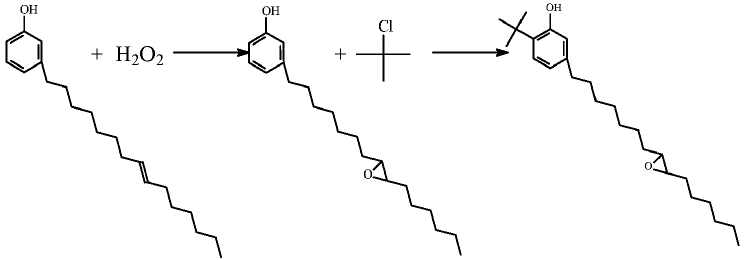

### Example 2

Tert-butylated epoxy cardanol (22g) prepared in Example 1, N-(2-hydroxyethyl)ethylenediamine (5g) and toluene (90g) were added to a three-neck flask (250mL), heated under stirring, and reacted at 90°C for 3 hours. After the completion of the reaction, the resulting mixture was distilled under reduced pressure for 1 hour to remove the solvent and unreacted raw materials to obtain tert-butylated aminocardanol (dark brown viscous liquid), and then boric acid (3g), N-(2-hydroxyethyl)ethylenediamine (6g), dodecanol (5g) and cyclohexane (90g) were added to the reaction vessel, stirred, warmed up followed by removing the water, reacted at 120°C for 3 hours, and filtered followed by removing the solvent and unreacted N-(2-hydroxyethyl)ethylenediamine by evaporation to produce an organoboron compound W-01.

An exemplary reaction scheme is shown in the following formula, where R is H.

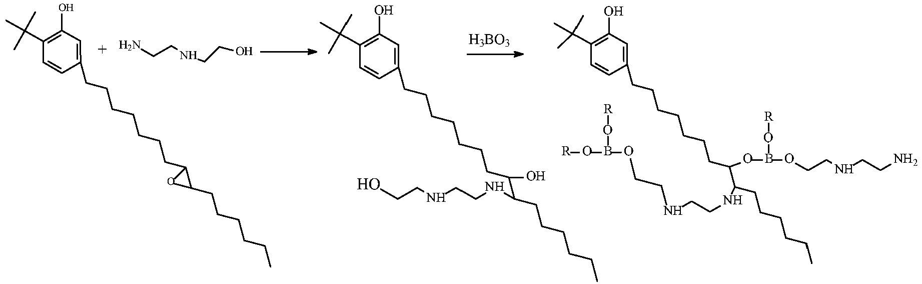

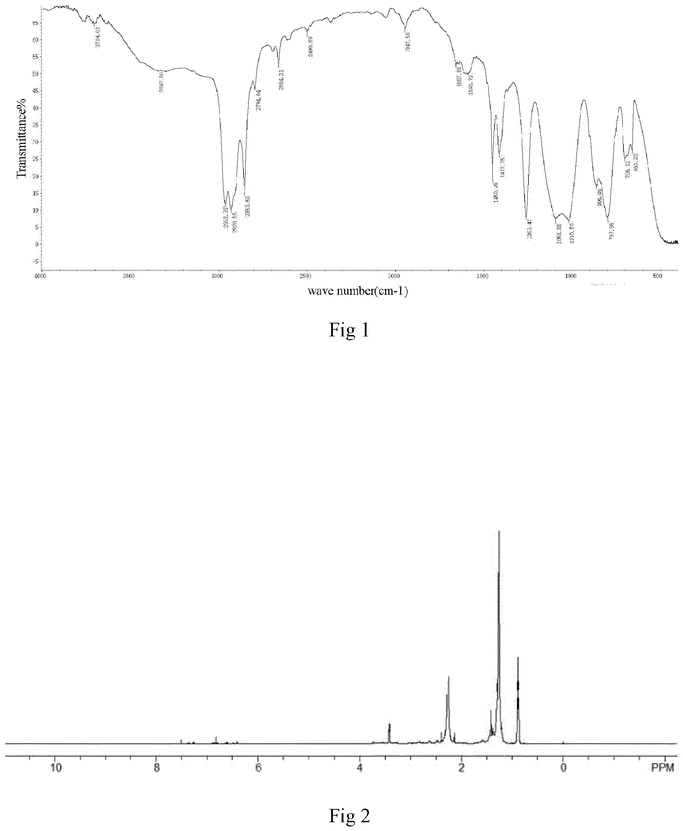

The product prepared in Example 2 was subjected to infrared spectrum analysis. The infrared spectrum is shown in Figure 1. The analysis results of the infrared spectrum are shown in Table 1. The ¹H-NMR spectrum is shown in Figure 2. The analysis results of the infrared spectrum are shown in Table 2.

**Table 1: Infrared analysis results of the product in Example 2**

| Characteristic absorption peak/cm⁻¹ | Attribution of absorption peak |
|---|---|
| 3704.08 | C-OH stretching vibration |
| 3342.86 | C-NH stretching vibration |
| 2962.33, 2928.55, 2853.63 | Stretching vibration of C-H in CH₃ and CH₂ |
| 1657.88, 1592.72 | Benzene ring skeleton stretching vibration |
| 1450.49 | CH₃, CH₂ deformation vibration |
| 1413.25 | C-N stretching vibration |
| 1260.47, 866.86 | Epoxy C-O-C stretching vibration |
| 1093.88 | C-O stretching vibration |
| 1019.59 | B-O stretching vibration |
| 797.96 | NH₂ twisting vibration |
| 706.12 | NH out-of-plane bending vibration |
| 661.22 | B-N coordination vibration |

**Table 2: ¹H-NMR spectrum analysis results of the product in Example 2**

| Chemical shift (δ) | Peak assignment |
|---|---|
| 7.58 | Phenolic hydroxyl proton peak |
| 6.45-7.31 | Proton peak on benzene ring |
| 3.62 | Proton peak on NH |
| 3.79 | Proton peak on B-O-CH₂ |
| 2.26 | Proton peak on N-CH₂ |
| 2.45 | Proton peak on CH₂ of biphenyl ring |
| 1.26-1.30 | Proton peak on alkyl chain |
| 0.88 | Proton peak on CH₃ |

Table 1 shows that characteristic peaks such as C-OH stretching vibration peak, C-NH stretching vibration peak, benzene ring skeleton stretching vibration peak, N-C stretching vibration peak, O-C stretching vibration peak and B-O stretching vibration peak were present in the spectrum of the product, which could indicate that the synthesized product was the target compound.

### Example 3

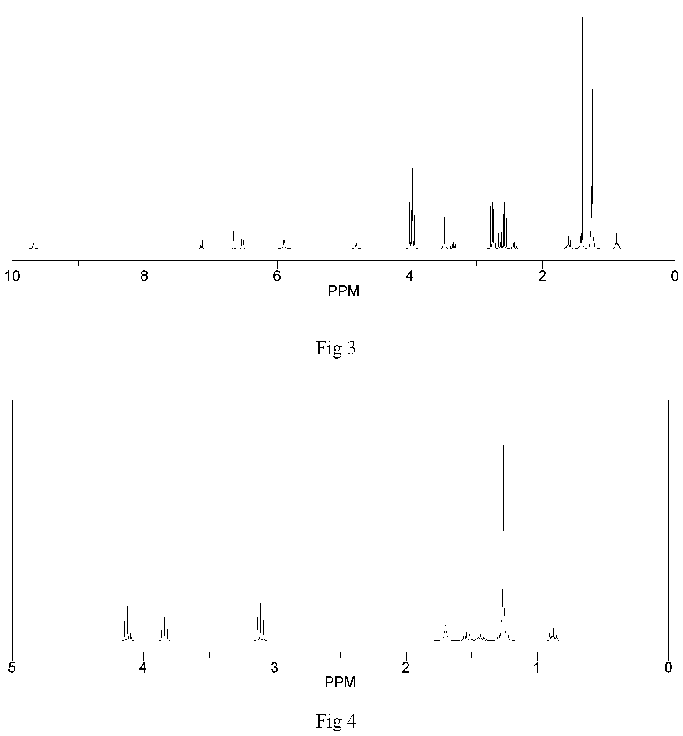

Tert-butylated epoxy cardanol (36g) prepared in Example 1, diethanolamine (10g) and toluene (90g) were added to a three-neck flask (250mL), heated under stirring, and reacted at 100°C for 4 hours. After the completion of the reaction, the resulting mixture was distilled under reduced pressure for 1 hour to remove the solvent and unreacted raw materials to obtain tert-butylated aminocardanol (dark brown viscous liquid). Then boric acid (6g), diethanolamine (20g) and cyclohexane (90g) were added to the reaction vessel, stirred, warmed up followed by removing the water, reacted at 150°C for 4 hours, and filtered followed by removing the solvent and unreacted diethanolamine by evaporation to produce an organoboron compound W-02, 1H-NMR spectrum of which was shown in Figure 3.

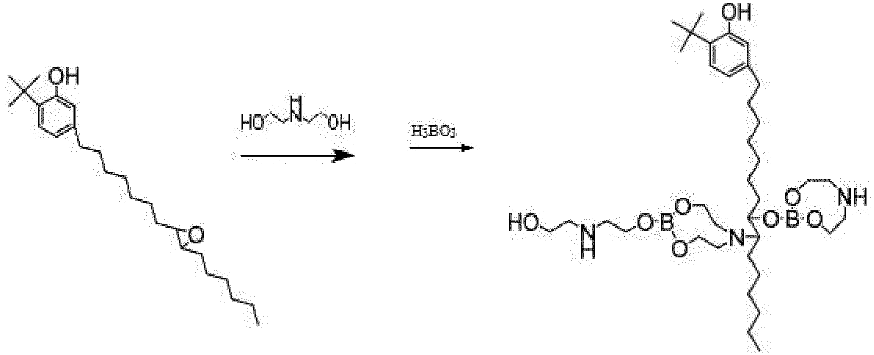

### Comparative Example 1

Cetyl alcohol (36.3), ethanolamine (18.3g), boric acid (6.2g) and a solvent of toluene (90g) were added to the reaction vessel, stirred, warmed up, reacted at 145°C for 6 hours, and filtered followed by removing the solvent and unreacted ethanolamine by evaporation to produce a comparative organoboron compound V-01, ¹H-NMR spectrum of which was shown in Figure 4.

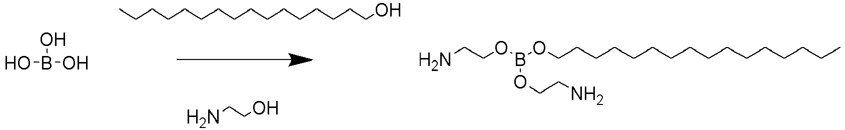

### Test Example 1

W-01, W-02, and V-01 were added respectively in a dose of 0.5wt% to diisooctyl sebacate (diester) or TCP base oil (the organoboron compound comprised 0.5% of the total mass of oil), and their anti-wear and friction-reducing properties were measured. The test conditions of the SRV anti-wear and friction-reducing test experiment were: temperature 30°C, load 100N, stroke 1mm, test time 1 hour, frequency 50Hz. The details of the SRV method can be found in National Energy Administration standard NB/SH/T 0847-2010. The test results are shown in Table 3.

**Table 3: SRV test results of the organoboron compounds of the present invention and the comparative organoboron compounds**

| No | | Organoboron additive type | Wear scar diameter/mm | Friction coefficient |
|---|---|---|---|---|
| diester | 1 | - | 0.69 | 0.121 |
| | 2 | W-01 | 0.69 | 0.111 |
| | 3 | W-02 | 0.66 | 0.110 |
| | 4 | V-01 | 0.69 | 0.112 |
| TCP | 5 | W-01 | 0.51 | 0.155 |
| | 6 | W-02 | 0.50 | 0.156 |
| | 7 | V-01 | 0.51 | 0.159 |

As can be seen from Table 3, the organoboron compounds of the present invention exhibit excellent anti-wear and friction-reducing properties.

### Test Example 2

W-01, W-02, V-01 and hindered phenolic antioxidants T501, T512 were added respectively in a dose of 0.5wt% to diisooctyl sebacate or TCP base oil (the organoboron compound or the comparative antioxidant comprised 0.5% of the total mass of oil), and their antioxidant properties were measured.

The test results are shown in Table 4. The test instrument was the TA5000 model DSC instrument of the American TA company. The test conditions were 190°C-240°C, oxygen pressure 0.5MPa, and heating rate 10°C/min.

**Table 4 Antioxidation test results**

| | Additive type | Oxidation induction period (190°C)/min |
|---|---|---|
| diisooctyl sebacate base oil (Test temperature: 190°C) | W-01 | 17.2 |
| | W-02 | 18.0 |
| | V-01 | 10.51 |
| | T501 | 16.5 |
| | T512 | 13.0 |
| TCP base oil (Test temperature: 240°C) | W-01 | >60 |
| | W-02 | >60 |
| | V-01 | <5 |
| | T501 | <5 |
| | T512 | <5 |

It can be seen from the comparison that the organoboron compounds of the present invention, while maintaining excellent anti-wear and friction-reducing properties, significantly improved the oxidation induction period of lubricating oil compositions, especially in TCP base oil, had extremely excellent antioxidant properties, and were antioxidants with excellent performance.

### Test Example 3

Each of the products W-01 of Example 2 of the present invention and p,p'-diisooctyl diphenylamine as an amine antioxidant, and a mixture of the two (each 50wt%) were added to diisooctyl sebacate base oil (the organoboron compound or the additive comprised 0.5% of the total mass of oil), and their antioxidant properties were measured. The test results are shown in Table 5. The test instrument was the TA5000 model DSC instrument of the American TA company. The test conditions were 240°C, oxygen pressure 0.5MPa, and heating rate 10°C/min. The properties of the lubricating oil compositions are shown in Table 5 below.

**Table 5 Antioxidation test results**

| Additive type | Appearance | Oxidation induction period (210°C)/min |
|---|---|---|
| The product W-01 of the present invention | Clear and transparent | 4.12 |
| p,p'-diisooctyl diphenylamine | Clear and transparent | 11.5 |
| W-01+p,p'-diisooctyl diphenylamine (each 50wt%) | Clear and transparent | 19.44 |

As can be seen from Table 5, the mixed composition of the organoboron compound of the present invention exhibited extremely excellent antioxidant properties, that is, indicating that the organoboron compound of the present invention exhibits excellent synergistic effects by being combined with an antioxidant.

Although the specific embodiments of the present invention have been described in detail above with reference to the examples, it should be pointed out that the protection scope of the present invention is not limited by these specific embodiments. Those skilled in the art can make appropriate changes to these embodiments without departing from the technical ideas and gist of the present invention, and these modified embodiments are obviously also included in the protection scope of the present invention.

### Industrial applicability

The present invention provides organoboron compounds with specific structures. The organoboron compounds of the present invention have excellent antioxidant property and anti-wear and friction-reducing property. Furthermore, the organoboron compounds of the present invention can be obtained from cardanol, which is an agricultural by-product. Therefore, the organoboron compounds of the present invention can be prepared in an environmentally friendly and low-cost manner.

## Claims

1. An organoboron compound, which has a structure as shown in formula (I): 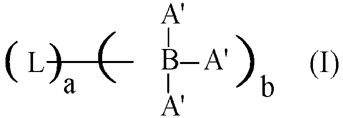
in formula (I), there are a L group(s) and b boron-containing group(s), a is an integer of 1-10 (preferably an integer of 1-5, more preferably 1, 2 or 3), b is an integer of 1-10 (preferably an integer of 1-7, more preferably 1, 2, 3, 4 or 5), each of said a L groups is identical or different from each other and each L group is independently selected from a group represented by formula (II); 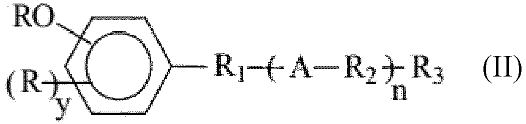
in formula (II), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from H and C₁₋₂₀ linear or branched alkyl, more preferably H and C₁₋₁₀ linear or branched alkyl, further preferably H and C₁₋₆ linear or branched alkyl); each of A groups in n structure units is identical or different from each other and each A group is independently selected from 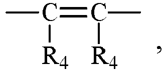 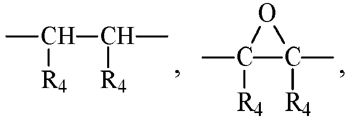 a group represented by formula (III) and a group represented by formula (IV), 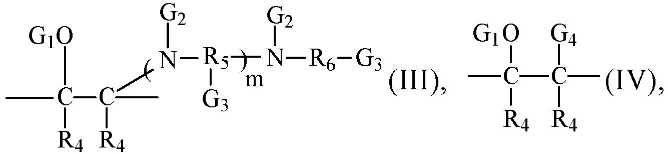
the R₄ group is each independently selected from Hand C₁₋₂₀ linear or branched alkyl (preferably each independently selected from H and C₁₋₆ linear or branched alkyl, more preferably selected from H and C₁₋₄ linear or branched alkyl);
m is independently an integer of 0-10 (preferably an integer of 0-5, more preferably 0, 1 or 2);
the R₅ group is each independently selected from 3-valent C₁₋₂₀ linear or branched alkyl (preferably each independently selected from 3-valent C₁₋₆ linear or branched alkyl, more preferably each independently selected from 3-valent C₁₋₄ linear or branched alkyl);
each G₂ group is independently selected from a bonding end bonded to G₄ groups present in other L group(s) than the L group in which it is located, C₁₋₁₀ linear or branched alkyl, -R₆G₃, H (preferably each independently selected from a bonding end bonded to G₄ groups present in other L group(s) than the L group in which it is located, C₁₋₆ linear or branched alkyl, -R₆G₃, H, more preferably each independently selected from a bonding end bonded to G₄ groups present in other L group(s) than the L group in which it is located, C₁₋₄ linear or branched alkyl, -ReGs, H);
each G₃ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H);
the R₆ group is selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
G₄ group is selected from a bonding end bonded to G₂ groups present in other L group(s) than the L group in which it is located, H;
in a L group(s), there is at least one A group that is a group represented by formula (III), there is at least one G₁ group that is a bonding end bonded to the boron atom in the boron-containing group;
each A' group in the b boron-containing group(s) is independently selected from a bonding end bonded to the G₁ group present in the L group, a group represented by formula (V), -OR', the R' group is H or C₁₋₂₀ linear or branched alkyl (preferably H or C₁₋₆ linear or branched alkyl, preferably H or C₁₋₄ linear or branched alkyl); 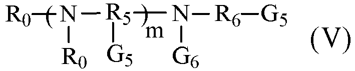
in formula (V), m is independently an integer of 0-10 (preferably an integer of 0-5, more preferably 0, 1 or 2);
the R₀ group is each independently selected from C₁₋₁₀ linear or branched alkyl, -R₆G₅, H (preferably each independently selected from C₁₋₆ linear or branched alkyl, -R₆G₅, H, preferably each independently selected from C₁₋₄ linear or branched alkyl, -R₆G₅, H);
in formula (V), the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
in formula (V), the G₆ group is selected from -R₆G₅, C₁₋₁₀ linear or branched alkyl, H (preferably selected from -R₆G₅, C₁₋₆ linear or branched alkyl, H, preferably selected from -R₆G₅, C₁₋₄ linear or branched alkyl, H);
the G₆ group is independently selected from a single bond, C₁₋₂₀ linear or branched alkylene (preferably each independently selected from a single bond, C₁₋₆ linear or branched alkylene, more preferably each independently selected from a single bond, C₁₋₄ linear or branched alkylene);
each G₅ group is independently selected from -OG₁, C₁₋₁₀ linear or branched alkyl, OH, H (preferably each independently selected from -OG₁, C₁₋₆ linear or branched alkyl, OH, H, more preferably each independently selected from - OG₁, C₁₋₄ linear or branched alkyl, OH, H), wherein the G₁ group is selected from a bonding end bonded to the boron atom in the boron-containing group, C₁₋₆ linear or branched alkyl, H (preferably selected from a bonding end bonded to the boron atom in the boron-containing group, C₁₋₄ linear or branched alkyl, H);
in the case that the group represented by formula (V) is present, in the group represented by formula (V), there is at least one G₁ group that is a bonding end bonded to the boron atom in the boron-containing group;
in the b boron-containing group(s), there is at least one A' group that is a bonding end bonded to the G₁ group present in the L group;
each group in the organoboron compound complies with the bonding rules.

2. The organoboron compound according to claim 1, which is **characterized in that**,
in formula (I), a is 1, 2 or 3, b is 1, 2, 3, 4 or 5, each of said a L groups is identical or different from each other and each L group is independently selected from a group represented by formula (II'), 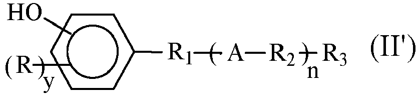
in formula (II'), HO is located at the meta position of the R₁ group on the benzene ring; y is 1 or 2; the R group is each independently selected from H and C₁₋₄ linear or branched alkyl; n is 1, 2 or 3; R₁ is each independently selected from a single bond and C₁₋₁₀ linear or branched alkylene; each of R₂s in n structure units is identical or different from each other and each R₂ is independently selected from a single bond and C₁₋₄ linear or branched alkylene; R₃ is selected from H and C₁₋₆ linear or branched alkyl; each of A groups in n structure units is identical or different from each other and each A group is independently selected from 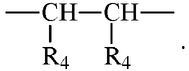 a group represented by formula (III) and a group represented by formula (IV), 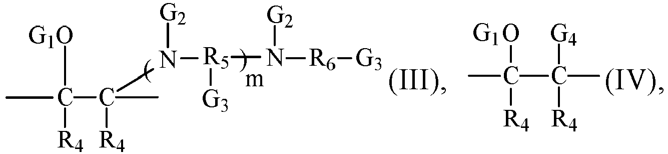
the R₄ group is each independently selected from H and C₁₋₄ linear or branched alkyl;
m is independently 0, 1 or 2;
the R₅ group is each independently selected from 3-valent C₁₋₄ linear or branched alkyl;
each G₂ group is independently selected from a bonding end bonded to G₄ groups present in other L group(s) than the L group in which it is located, C₁₋₄ linear or branched alkyl, -R₆G₃, H;
each G₃ group is independently selected from -OG₁, C₁₋₄ linear or branched alkyl, OH, H;
the R₆ group is selected from a single bond, C₁₋₄ linear or branched alkylene; G₁ group is selected from a bonding end bonded to the boron atom in the boron-containing group, C₁₋₄ linear or branched alkyl, H;
G₄ group is selected from a bonding end bonded to G₂ groups present in other L group(s) than the L group in which it is located, H;
in a L group(s), there is at least one A group that is a group represented by formula (III), there is at least one G₁ group that is a bonding end bonded to the boron atom in the boron-containing group;
each A' group in the b boron-containing group(s) is independently selected from a bonding end bonded to the G₁ group present in the L group, a group represented by formula (V), -OR', the R' group is H or C₁₋₄ linear or branched alkyl; 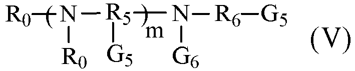
in formula (V), m is independently 0, 1 or 2;
the R₀ group is each independently selected from C₁₋₄ linear or branched alkyl, -R₆G₅, H;
in formula (V), the R₅ group is each independently selected from 3-valent C₁₋₄ linear or branched alkyl;
in formula (V), the G₆ group is selected from -R₆G₅, C₁₋₄ linear or branched alkyl, H;
the G₆ group is independently selected from a single bond, C₁₋₄ linear or branched alkylene;
each G₅ group is independently selected from -OG₁, C₁₋₄ linear or branched alkyl, OH, H, wherein the G₁ group is selected from a bonding end bonded to the boron atom in the boron-containing group, C₁₋₄ linear or branched alkyl, H; in the case that the group represented by formula (V) is present, in the group represented by formula (V), there is at least one G₁ group that is a bonding end bonded to the boron atom in the boron-containing group;
in the b boron-containing group(s), there is at least one A' group that is a bonding end bonded to the G₁ group present in the L group.

3. The organoboron compound according to claim 1 or 2, which is **characterized in that**, the organoboron compound is one or more compounds selected from those having the following structures: 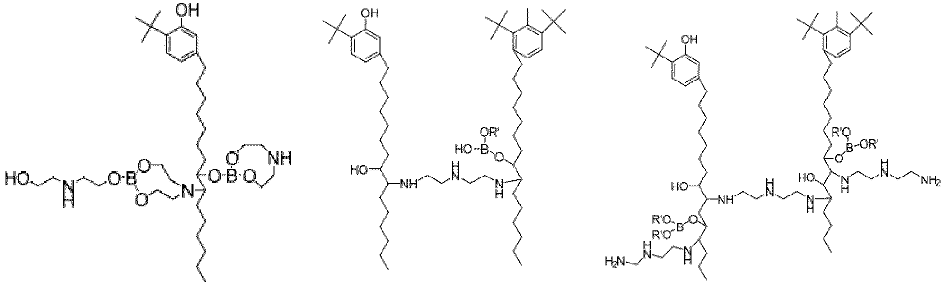 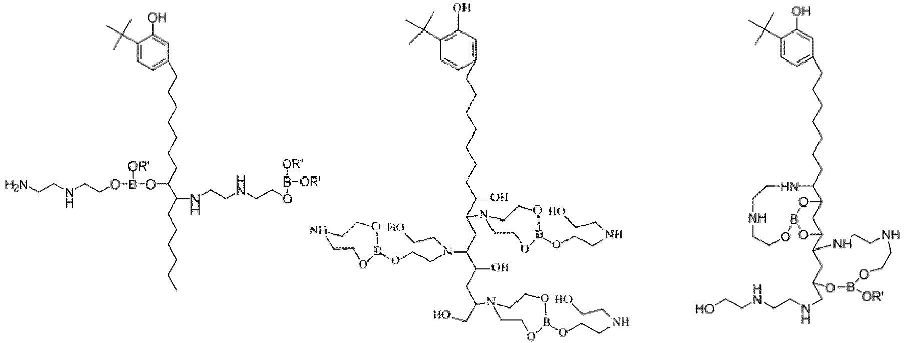 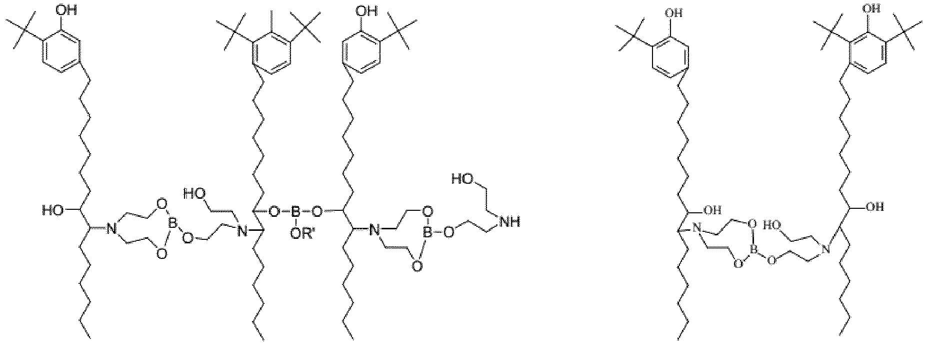 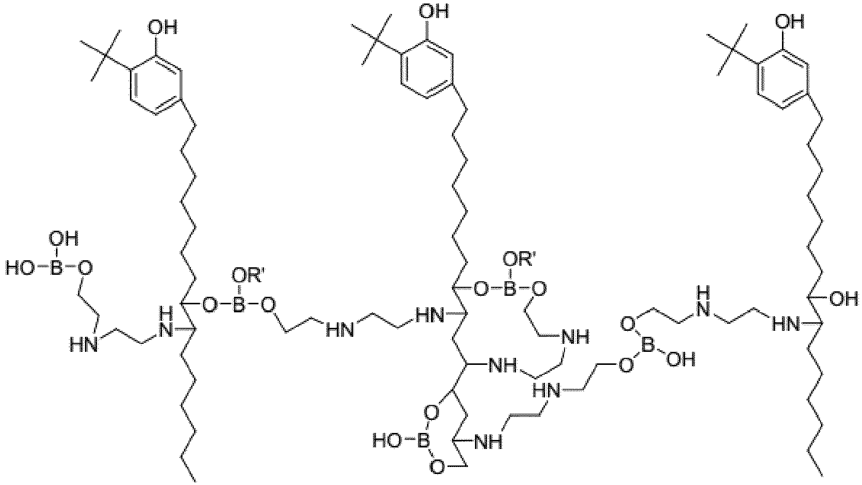 wherein R' group is H or C₁-C₂₀ linear or branched alkyl (preferably H or C₁₋₆ linear or branched alkyl, preferably H or C₁₋₄ linear or branched alkyl).

4. A process for preparing an organoboron compound, which comprises the following steps:
(1) reacting a compound represented by formula (X) with a peroxide; 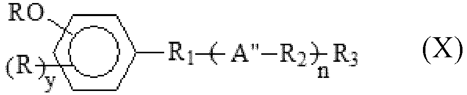 in formula (X), RO is bonded to the benzene ring (RO is preferably located at the meta position of the R₁ group on the benzene ring); y R group(s) is/are bonded to the benzene ring; y is selected from an integer of 0-4 (preferably an integer of 1-3, more preferably 1 or 2); the R group is each independently selected from H and C₁₋₂₀ linear or branched alkyl (preferably each independently selected from H and C₁₋₆ linear or branched alkyl, preferably each independently selected from H and C₁₋₄ linear or branched alkyl, more preferably selected from H and tert-butyl); n is an integer of 1-10 (preferably an integer of 1-5, more preferably 1, 2 or 3); R₁ is each independently selected from a single bond and C₁₋₃₀ linear or branched alkylene (preferably selected from a single bond and C₁₋₂₀ linear or branched alkylene, preferably C₁₋₁₀ linear or branched alkylene); each of R₂s in n structure units is identical or different from each other and each R₂ is independently selected from a single bond and C₁₋₂₀ linear or branched alkylene (preferably each independently selected from a single bond and C₁₋₆ linear or branched alkylene, preferably each independently selected from a single bond and C₁₋₄ linear or branched alkylene); R₃ is selected from H and C₁₋₃₀ linear or branched alkyl (preferably selected from Hand C₁₋₂₀ linear or branched alkyl, preferably Hand C₁₋₁₀ linear or branched alkyl, further preferably H and C₁₋₆ linear or branched alkyl); A"s in n structural units are identical or different from each other and each independently selected from 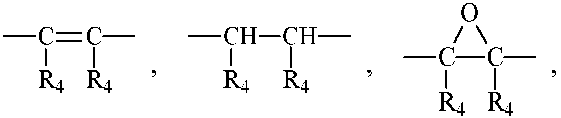 wherein the R₄ group is each independently selected from H and C₁₋₂₀ linear or branched alkyl (preferably each independently selected from H and C₁₋₆ linear or branched alkyl, preferably selected from Hand C₁₋₄ linear or branched alkyl); in formula (X) there is at least one A" that is 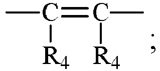
(2) reacting the reaction product of step (1) with a compound represented by formula (Y); 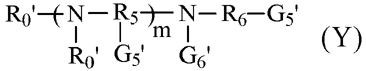
in formula (Y), m is an integer of 0-10 (preferably an integer of 0-5, more preferably 0, 1 or 2);
the R₀' group is each independently selected from C₁₋₁₀ linear or branched alkyl, -R₆OH, H (preferably each independently selected from C₁₋₆ linear or branched alkyl, -R₆OH, H, preferably each independently selected from C₁₋₄ linear or branched alkyl, -R₆OH, H);
the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
each G₅' group is independently selected from C₁₋₁₀ linear or branched alkyl, OH, H (preferably each independently selected from C₁₋₆ linear or branched alkyl, OH, H, more preferably independently selected from C₁₋₄ linear or branched alkyl, OH, H);
G₆' group is selected from C₁₋₁₀ linear or branched alkyl, -R₆OH, H (preferably selected from -R₆OH, C₁₋₆ linear or branched alkyl, H, preferably selected from -R₆OH, C₁₋₄ linear or branched alkyl, H); the R₆ group is each independently selected from a single bond, C₁₋₂₀ linear or branched alkylene (preferably each independently selected from a single bond, C₁₋₆ linear or branched alkylene, preferably each independently selected from a single bond, C₁₋₄ linear or branched alkylene);
in formula (Y), at least one of R₀' group and G₆' group is H, and optionally at least one G₅' group is OH and/or at least one G₆' group and/or at least one R₀' group is -R₆OH;
(3) reacting the reaction product of step (2) with an inorganic boron compound to obtain an organoboron compound.

5. The preparation method according to claim 3, which further comprises step (4), wherein the reaction product of step (3) and a compound represented by formula (Y') are reacted to produce an organoboron compound, 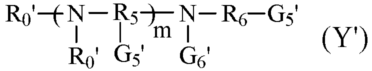
in formula (Y'), m is an integer of 0-10 (preferably an integer of 0-5, more preferably 0, 1 or 2);
in formula (Y'), the R₀' group is each independently selected from C₁₋₁₀ linear or branched alkyl, -R₆OH, H (preferably each independently selected from C₁₋₆ linear or branched alkyl, -R₆OH, H, preferably each independently selected from C₁₋₄ linear or branched alkyl, -R₆OH, H);
in formula (Y'), the R₅ group is each independently selected from 3-valent C₁₋₂₀ linear or branched alkyl (preferably each independently selected from 3-valent C₁₋₆ linear or branched alkyl, preferably each independently selected from 3-valent C₁₋₄ linear or branched alkyl);
in formula (Y'), each G₅' group is independently selected from C₁₋₁₀ linear or branched alkyl, OH, H (preferably each independently selected from C₁₋₆ linear or branched alkyl, OH, H, more preferably independently selected from C₁₋₄ linear or branched alkyl, OH, H);
in formula (Y'), G₆' group is selected from C₁₋₁₀ linear or branched alkyl, - R₆OH, H (preferably selected from -R₆OH, C₁₋₆ linear or branched alkyl, H, preferably selected from -R₆OH, C₁₋₄ linear or branched alkyl, H); the R₆ group is each independently selected from a single bond, C₁₋₂₀ linear or branched alkylene (preferably each independently selected from a single bond, C₁₋₆ linear or branched alkylene, preferably each independently selected from a single bond, C₁₋₄ linear or branched alkylene);
in formula (Y'), at least one G₅' group is OH and/or at least one G₆' group and/or at least one R₀' group is -R₆OH.

6. The preparation method according to claim 4 or 5, which further comprises step (1'),
before step (1), step (1') is carried out, wherein, a compound represented by formula (X-1) and an alkylation agent are subjected to the alkylation reaction to produce a compound represented by formula (X) (wherein, y is not zero); 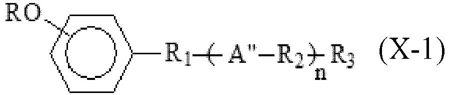 or,
after step (1), step (1') is carried out, wherein, the product of step (1) and an alkylation agent are reacted to produce an alkylation product in which the benzene ring in the product of step (1) is alkylated, and the alkylation product is used in the reaction of step (2),
preferably, the alkylation in step (1') is tert-butylation.

7. The preparation method according to any one of claims 4-6, which is **characterized in that**,
the compound represented by formula (X) is the following formula (X') 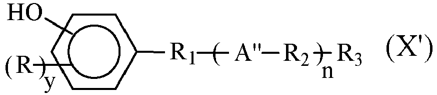
is formula (X'), HO is located at the meta position of the R₁ group on the benzene ring; y is 1 or 2;
the R group is each independently selected from H and C₁₋₄ linear or branched alkyl; n is 1, 2 or 3; R₁ is each independently selected from a single bond and C₁₋₁₀ linear or branched alkylene; each of R₂s in n structure units is identical or different from each other and each R₂ is independently selected from a single bond and C₁₋₄ linear or branched alkylene; R₃ is selected from H and C₁₋₆ linear or branched alkyl; A"s in n structural units are identical or different from each other and each independently selected from 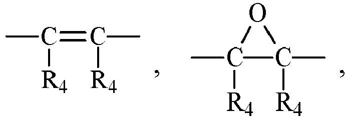
wherein the R₄ group is each independently selected from H and C₁₋₄ linear or branched alkyl;
in formula (Y) and formula (Y'), m is independently 0, 1 or 2;
in formula (Y) and formula (Y'), the R₀' group is each independently selected from C₁₋₄ linear or branched alkyl, -R₆OH, H;
in formula (Y) and formula (Y'), the R₅ group is each independently selected from 3-valent C₁₋₄ linear or branched alkyl;
in formula (Y) and formula (Y'), each G₅' group is independently selected from C₁₋₄ linear or branched alkyl, OH, H;
in formula (Y) and formula (Y'), G₆' group is each independently selected from -R₆OH, C₁₋₄ linear or branched alkyl, H; the R₆ group is each independently selected from a single bond, C₁₋₄ linear or branched alkylene.

8. The preparation method according to any of claims 4-7, which is **characterized in that**,
in step (1), the compound represented by formula (X) is selected from cardanol and alkylated cardanol; and/or,
said peroxide is one or more of hydrogen peroxide, peroxyformic acid, peracetic acid, peroxysulfonic acid, m-chloroperbenzoic acid, tert-butyl hydrogen peroxide, tert-butyl peracetate, methyl ethyl ketone peroxide, dibenzoyl peroxide, and cyclohexanone peroxide; and/or,
in step (2), the compound represented by formula (Y) is one or more of aliphatic amines, polyalkylene polyamines, one or more hydroxy groups-substituted aliphatic amines, one or more hydroxy groups-substituted polyalkylene polyamines; and/or,
in step (3), the inorganic boron compound is one or more of boric acid, boron oxide, tetraboric acid, metaboric acid, and boric acid partial ester,
in step (4), the compound represented by formula (Y') is one or more hydroxy groups-substituted aliphatic amines, and one or more hydroxy groups-substituted polyalkylene polyamines.

9. The preparation method according to any of claims 4-8, which is **characterized in that**, the equivalent ratio of the compound represented by formula (X), the peroxide, the compound represented by formula (Y), and the inorganic boron compound is 1:0.5-10:0.5-10:0.5-5 (preferably 1:2-3:2-3:1-2), in the case that step (4) is performed, the equivalent ratio of the compound represented by formula (X), the peroxide, the compound represented by formula (Y), the inorganic boron compound, and the compound represented by formula (Y') is 1:0.5-10:0.5-10:0.5-5:0.5-10 (preferably 1:2-3:2-3:1-2:2-3).

10. The preparation method according to any of claims 4-9, which is **characterized in that**, the reaction temperature of step (1) is 0-100°C (preferably 20-80°C); the reaction temperature of step (2) is 50-150°C (preferably 60-100°C); the reaction temperature of step (3) is 80-200°C (preferably 110-150°C), the reaction temperature of step (4) is 50-150°C (preferably 60-100°C).

11. The preparation method according to any of claims 4-10, which is **characterized in that**, the reaction time of step (1) is 1-10h (preferably 3-5h); the reaction time of step (2) is 1-10h (preferably 2-4h); the reaction time of step (3) is 1-10h (preferably 3-5h); the reaction time of step (4) is 1-10h (preferably 2-4h).

12. The preparation method according to any of claims 4-11, which is **characterized in that**, at least one of reaction steps (1), (2), (3) and (4) is carried out in the presence of a diluent and/or solvent.

13. The preparation method according to any of claims 4-12, which is **characterized in that**, at least one of reaction steps (1), (2), (3) and (4) is carried out under the protection of an inert gas atmosphere.

14. Use of the organoboron compound according to any one of claims 1-3 or the organoboron compound obtained by the preparation method according to any one of claims 4-13 as antioxidants, antiwear agents or friction reducers for lubricating oils.

15. A mixed composition of organoboron compound, which contains the organoboron compound according to any one of claims 1-3 or the organoboron compound obtained by the preparation method according to any one of claims 4-13, and an optional dispersion media.

16. The mixed composition according to claim 15, which further contains other lubricating oil additives, preferably amine-type antioxidants, more preferably p,p'-diisooctyldiphenylamine.

17. A lubricating oil composition, which contains the organoboron compound according to any one of claims 1-3 or the organoboron compound obtained by the preparation method according to any one of claims 4-13, and a lubricating oil base oil, wherein the organoboron compound comprises 0.001%-100%, preferably 0.005%-90%, more preferably 0.01%-50%, further optionally 0.05%-30%, further optionally 0.1%-25%, further optionally 0.5%-20% by weight of the lubricating oil composition.
